(19) **Europäisches Patentamt / European Patent Office / Office européen des brevets**

(11) **EP 4 645 074 A1**

(12) **EUROPEAN PATENT APPLICATION**

(43) Date of publication:
**05.11.2025 Bulletin 2025/45**

(21) Application number: **25172710.3**

(22) Date of filing: **25.04.2025**

(51) International Patent Classification (IPC):
***G06F 9/30*** *(2018.01)*

(52) Cooperative Patent Classification (CPC):
**G06F 9/30032**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**GE KH LA MA MD TN**

(30) Priority: **29.04.2024 GB 202406000**

(71) Applicant: **Imagination Technologies Limited Kings Langley, Hertfordshire WD4 8LZ (GB)**

(72) Inventor: **Sheppard, Mark Kings Langley, WD4 8LZ (GB)**

(74) Representative: **Slingsby Partners LLP 1 Kingsway London WC2B 6AN (GB)**

(54) **SHUFFLE ACCELERATOR FOR GRAPHICS PROCESSING UNIT**

(57) Shuffle accelerators for shuffling data between a plurality of instances executing a shader on a shader core of a graphics processing unit. The shuffle accelerators include routing logic, slave logic and master logic. The routing logic comprises a plurality of data input ports, a plurality of data output ports, and hardware to selectively connect one or more of the plurality of data input ports to one or more of the plurality of data output ports. The slave logic is configured to selectively provide data from a first set of instances to one or more of the plurality of data input ports and receive data from one or more of the plurality of data output ports for a second set of instances. The master logic is configured to, in response to receiving a shuffle instruction that identifies a shuffle of data between the plurality of instances, cause the routing logic and the slave logic to perform the identified shuffle of data in a plurality of phases, wherein in each phase of the plurality of phases a subset of the instances of the plurality of instances receive data from a subset of the instances of the plurality of instances.

FIG. 3

**Description**

CROSS-REFERENCE TO RELATED APPLICATION

This application claims priority from UK patent application 2406000.6 filed on 29 April 2024, which is herein incorporated by reference in its entirety.

TECHNICAL FIELD

This application is directed to hardware for accelerating the exchange of data between instances in a slot of a shader core of a graphics processing unit.

BACKGROUND

A graphics processing unit (GPU) is hardware designed to accelerate the generation of a rendering output (e.g. image). Many of today's GPUs generate a rendering output (e.g. an image) by processing graphics data in accordance with one or more programmable shaders. As is known to those of skill in the art, a shader is a program run by a GPU that is generally, but not necessarily, used to implement rendering effects. They are called shaders because they were traditionally used to control lighting and shading effects, but they may also be used to implement other effects or to perform other operations or calculations.

A GPU may have one or more shader cores each of which is capable of executing any one of a plurality of different shaders on a set of data. Each shader core of a GPU can run a bundle of instances (which may also be referred to as a bundle of threads) together wherein each instance runs the same instruction of a shader at the same time. This bundle of instances may be referred to as a slot or a task. The instances in a slot generally have a logical relationship (e.g. they are shading nearby pixels or processing nearby elements of a compute grid). In some cases, a slot may have up to 128 instances. A shader core may have, for each instance in a slot, an execution unit that comprises hardware (e.g. arithmetic logic units (ALUs)) that allows operations such as, but not limited to, addition and multiplication to be performed on each instance in parallel; and high-bandwidth, low latency private storage (e.g. registers) which feeds the associated execution unit.

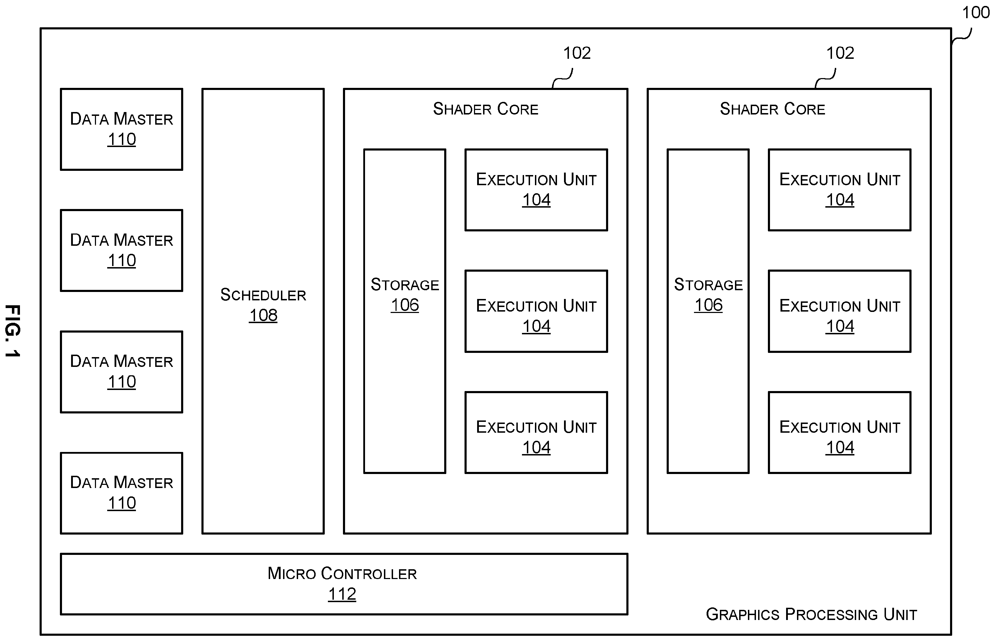

For example, FIG. 1 illustrates an example GPU 100 with a plurality of shader cores 102. Each shader core 102 comprises a plurality of execution units 104 and storage 106 (which may be referred to as a unified store (US)). Each execution unit 104 (i) comprises hardware (e.g. arithmetic logic units (ALUs)) that allows the execution unit 104 to execute a shader for an instance, and (ii) is allocated a portion of the storage 106, which may be referred to as instance private storage, in which data related to the instance running on that execution unit 104 can be temporarily stored. Each shader core 102 receives shader tasks from a scheduler 108 which identifies a shader to be executed and the data (e.g. slot) that the shader is to be executed on. A shader task may also identify which instances in the slot are active for the shader. In response to receiving a shader task, the shader core 102 causes the execution units 104 to execute the identified shader for each (active) instance in the slot at the same time. The shader tasks may be initiated by components 110, which may be referred to as task masters or data masters. FIG. 1 represents multiple data master components 110, which may for example initiate shader tasks of different types, but in other examples a single data master component 110 may be present that initiates all the shader tasks (i.e. a single data master component 110 initiating different types of shader tasks).

The example GPU 100 of FIG. 1 comprises a micro controller 112 which is configured to control scheduling of work on the GPU 100. For example, the micro controller 112 may receive tasks from a host (e.g. central processing unit (CPU)) and cause a data master 110 to generate or initiate the task. In response to receiving a task request from the micro controller 112, a data master 110 generates the task and sends it to the scheduler 108 where it is added to a task queue. The scheduler 108 is configured to allocate resources to the task in the queue (e.g. allocate portions of the storage 106) and then schedule and issue the tasks to the shader cores 102. Each shader core 102 then schedules and executes the tasks received from the scheduler 108.

It will be evident to a person of skill in the art that this is an example GPU only. For example other GPUs may not have a micro controller 112 and the scheduling of work on the GPU may be controlled by, for example, a driver running on the host computer (e.g. CPU). It will also be evident to a person of skill in the art that the GPU may also comprise other components which are not shown, such as, but not limited to, a tiling engine (if the GPU supports tiled-based rendering), a system level cache and a memory management unit (MMU) and/or a tessellation unit which is configured to subdivide patches into smaller primitives.

Traditionally each instance in a slot operated independently on a piece of the output. For example, each instance may have worked on a separate pixel. However, as shaders became more advanced, it became common to have instances work together to generate an output. As a result, it became necessary for instances to share their private data (e.g. the data stored in their private storage) with other instances. The exchange of data between instances in a slot is referred to herein as a data shuffle within a slot or simply a shuffle. Shuffles between instances in a slot have become so prolific that graphics and compute APIs now define a programming model for shuffles. The feature is known as "Subgroups" (OpenCL, OpenGL, Vulkan) or "Wave Intrinsics" (DirectX).

Historically, the exchange of data between instances in a slot was achieved by (i) writing data stored in an instance's private storage to global or local memory and using barriers for synchronisation between the instances; or (ii) using global or local atomics. As is known to those of skill in the art, an atomic function performs a read-modify-write atomic operation on a value residing in global or shared memory. For example, an atomic add operation reads a value at some address in global or shared memory, adds a number to it, and writes the result back to the same address. The operation is atomic in the sense that it is guaranteed to be performed without interference from other instances. In other words, no other instance can access this address until the operation is complete. If an atomic instruction executed by a group reads, modifies, and writes to the same location in global memory for more than one of the instances of a group, each read/modify/write to that location occurs and they are all serialized, but the order in which they occur is undefined.

However, shared memory (local or global) may be low bandwidth and high latency thus exchanging data via shared memory (local or global memory) may be slow and synchronising all of the instances via barriers means that many instances that are not exchanging data are idled unnecessarily. Furthermore, while atomics provide an improvement over simply exchanging data via shared memory, since only those instances that need to perform the atomic operation are synchronised, global and local atomics still generally access low bandwidth and high latency memory.

Accordingly it is desirable to be able to efficiently shuffle data between different combinations of instances within a slot.

SUMMARY

This Summary is provided to introduce a selection of concepts in a simplified form that are further described below in the Detailed Description. This Summary is not intended to identify key features or essential features of the claimed subject matter, nor is it intended to be used to limit the scope of the claimed subject matter.

Described herein are shuffle accelerators for shuffling data between a plurality of instances executing a shader on a shader core of a graphics processing unit. The shuffle accelerators include routing logic, slave logic and master logic. The routing logic comprises a plurality of data input ports, a plurality of data output ports, and hardware to selectively connect one or more of the plurality of data input ports to one or more of the plurality of data output ports. The slave logic is configured to selectively provide data from a first set of instances to one or more of the plurality of data input ports and receive data from one or more of the plurality of data output ports for a second set of instances. The master logic is configured to, in response to receiving a shuffle instruction that identifies a shuffle of data between the plurality of instances, cause the routing logic and the slave logic to perform the identified shuffle of data in a plurality of phases, wherein in each phase of the plurality of phases a subset of the instances of the plurality of instances receive data from a subset of the instances of the plurality of instances.

A first aspect provides a shuffle accelerator for shuffling data between a plurality of instances executing a shader on a shader core of a graphics processing unit, the shuffle accelerator comprising: routing logic comprising a plurality of data input ports, a plurality of data output ports and hardware to selectively connect one or more of the plurality of data input ports to one or more of the plurality of data output ports; slave logic configured to selectively provide data from a first set of instances to one or more of the plurality of data input ports and receive data from one or more of the plurality of data output ports for a second set of instances; and master logic configured to, in response to receiving a shuffle instruction that identifies a shuffle of data between the plurality of instances, cause the routing logic and the slave logic to perform the identified shuffle of data in a plurality of phases, wherein in each phase of the plurality of phases a subset of the instances of the plurality of instances receive data from a subset of the instances of the plurality of instances.

A second aspect provides a method of shuffling data between a plurality of instances executing a shader on a shader core of a graphics processing unit using a shuffle accelerator, the method comprising, at the shuffle accelerator: receiving a shuffle instruction that identifies a shuffle of data between the plurality of instances; dividing the identified shuffle into a plurality of phases, wherein each phase comprises a set of potential receive instances and a set of potential send instances wherein a potential receive instance in a phase can receive data from any potential send instance in the phase, the set of potential receive instances and the set of potential send instances in a phase each comprising a subset of the plurality of instances; and for each of the plurality of phases, providing data from one or more of the potential send instances in the phase to one or more of the potential receive instances in the phase.

A third aspect provides a graphics processing unit configured to perform the method of the second aspect.

A fourth aspect provides a graphics processing unit comprising the shuffle accelerator of the first aspect.

A fifth aspect provides a computer-implemented method of generating a set of computer executable instructions that represent a shader that is to be executed on a shader core of a graphics processing unit, the shader core comprising a shuffle accelerator, the method comprising: receiving a description of the shader that comprises information identifying a plurality of functions to be executed as part of the shader; for each function of the plurality of functions, determining whether the function involves at least one shuffle of data between a plurality of instances executing the shader; in response to determining that a function involves at least one shuffle, mapping the function to a set of computer executable instructions that comprise a shuffle instruction for each shuffle of the at least one shuffle that identifies a shuffle of data between the plurality of instances, each shuffle instruction, when executed at the shader core, causes the shuffle accelerator to perform the identified shuffle in a plurality of phases, wherein in each phase a subset of the instances of the plurality of instances receive data from a subset of the instances of the plurality of instances; and assembling the set of computer executable instructions mapped to the plurality of functions to form the shader.

The plurality of instances may be divisible into one or more equal-sized shuffle groups wherein a shuffle comprises a shuffle of data between instances within a same shuffle group; each shuffle instruction may comprise information identifying the one or more shuffle groups for the corresponding shuffle; and a maximal set of phases to implement a shuffle may be based on the one or more shuffle groups, wherein the plurality of phases to perform a shuffle comprises all or only a subset of the maximal set of phases.

The information in a shuffle instruction identifying the one or more shuffle groups for the corresponding shuffle may comprise information identifying a number of instances per shuffle group.

Each shuffle instruction may comprise information identifying which of the maximal set of phases are to form the plurality of phases for the corresponding shuffle.

The information in a shuffle instruction identifying which of the maximal set of phases are to form the plurality of phases for the corresponding shuffle may comprise a phase mask that comprises a bit for each possible phase that indicates whether the corresponding phase is to form part of the plurality of phases for the corresponding shuffle.

A shuffle of data between the plurality of instances may comprise each of one or more receive instances of the plurality of instances receiving data from an identified send instance of the plurality of instances, each send instance being identified by an index; each shuffle instruction may comprise information identifying index data; and, each shuffle instruction, when executed by the shader core, may cause the shuffle accelerator to generate the index of the send instance for each of the one or more receive instances from the identified index data.

The index data may be one of: index data that is common to the one or more receive instances and separate index data for each of the one or more receive instances.

Each shuffle instruction may comprise information identifying an index generation mode of a plurality of index generation modes to be used to generate the indices from the identified index data; and, each shuffle instruction, when executed at the shader core, causes the shuffle accelerator to generate the index of the send instance for each of the one or more receive instances in accordance with the identified index generation mode.

The plurality of index generation modes may comprise one or more of: an absolute indexing mode in which the index data identifies an absolute index within a shuffle group, a relative indexing mode in which the index data identifies an index relative to an index of the receive instance, and an XOR indexing mode in which an XOR operation is performed on the index data and an index of the receive instance to determine the index of the send instance.

Each shuffle instruction may comprise information indicating whether the shuffle instruction relates to a shuffle burst, and, a shuffle instruction that indicates that the shuffle instruction relates to a shuffle burst, when executed at the shader core, may cause the shuffle accelerator to perform the identified shuffle multiple times on different data.

Each shuffle instruction may comprise information indicating which instances of the plurality of instances are to receive data in the corresponding shuffle, and, each shuffle instruction, when executed at the shader core, may cause the shuffle accelerator to disable hardware related to any instance indicated as not receiving data in the corresponding shuffle.

The shader core may be configured to not execute an instruction of a shader for an instance in which predicate information related to that instruction indicates that the instance is not to execute that instruction, and each shuffle instruction may comprise information indicating whether the shuffle accelerator is to update the predicate information to indicate that any instance that is indicated as not receiving data in the shuffle is not to execute a subsequent instruction of the shader.

The data that is shuffled may comprise up to M-bits per instance, wherein M is an integer greater than one; and each shuffle instruction may comprise information indicating a number of bits of the M bits that is to be used for the data to be shuffled.

A shuffle of data between the plurality of instances may comprise each of one or more receive instances of the plurality of instances receiving data from an identified send instance of the plurality of instances; the shuffle accelerator may be configured to cause an identity value to be provided to a receive instance of the one or more receive instances if the identified send instance is not executing the shuffle instruction; and each shuffle instruction may comprise information identifying the identity value for the corresponding shuffle.

The method may further comprise loading the shader into memory accessible by the shader core.

The method may further comprise causing the shader core to execute the shader.

The shuffle accelerators and the graphics processing units described herein may be embodied in hardware on an integrated circuit. There may be provided a method of manufacturing, at an integrated circuit manufacturing system, a shuffle accelerator or a graphics processing unit described herein. There may be provided an integrated circuit definition dataset that, when processed in an integrated circuit manufacturing system, configures the system to manufacture a shuffle accelerator or a graphics processing unit described herein. There may be provided a non-transitory computer readable storage medium having stored thereon a computer readable description of a shuffle accelerator or a graphics processing unit described herein that, when processed in an integrated circuit manufacturing system, causes the integrated circuit manufacturing system to manufacture an integrated circuit embodying the shuffle accelerator or the graphics processing unit.

There may be provided an integrated circuit manufacturing system comprising: a non-transitory computer readable storage medium having stored thereon a computer readable description of a shuffle accelerator or a graphics processing unit described herein; a layout processing system configured to process the computer readable description so as to generate a circuit layout description of an integrated circuit embodying the shuffle accelerator or the graphics processing unit; and an integrated circuit generation system configured to manufacture the shuffle accelerator or the graphics processing unit according to the circuit layout description.

There may be provided computer program code for performing any of the methods described herein. There may be provided non-transitory computer readable storage medium having stored thereon computer readable instructions that, when executed at a computer system, cause the computer system to perform any of the methods described herein.

The above features may be combined as appropriate, as would be apparent to a skilled person, and may be combined with any of the aspects of the examples described herein.

BRIEF DESCRIPTION OF THE DRAWINGS

Examples will now be described in detail with reference to the accompanying drawings in which:

FIG. 1 is a block diagram of an example graphics processing unit with multiple shader cores;

FIG. 2 is a block diagram of an example shader core of FIG. 1 where the instances are divided into clusters;

FIG. 3 is a block diagram of a first example shuffle accelerator for shuffling data between instances in a slot of a shader core of a graphics processing unit;

FIG. 4 is a block diagram illustrating an example set of connections between the slave logic units of FIG. 3 and the routing logic of FIG. 3;

FIG. 5 is a schematic diagram illustrating a first example method of implementing a reduction over eight instances;

FIG. 6 is a schematic diagram illustrating a second example method of implementing a reduction over eight instances;

FIG. 7 is a flow diagram of an example method which may be implemented by the master logic of FIG. 3;

FIG. 8 is a flow diagram of an example method which may be implemented by a slave logic unit of FIG. 3;

FIG. 9 is a block diagram of a second example shuffle accelerator for shuffling data between instances in a slot of a shader core of a graphics processing unit;

FIG. 10 is an example flow diagram of an example method for generating a set of computer executable instructions representing a shader that comprise one or more shuffle instructions;

FIG. 11 is a block diagram of an example computing system in which the shuffle accelerators and the graphics processing units described herein may be implemented; and

FIG. 12 is a block diagram of an integrated circuit manufacturing system for generating an integrated circuit embodying a shuffle accelerator or a graphics processing unit described herein.

The accompanying drawings illustrate various examples. The skilled person will appreciate that the illustrated element boundaries (e.g., boxes, groups of boxes, or other shapes) in the drawings represent one example of the boundaries. It may be that in some examples, one element may be designed as multiple elements or that multiple elements may be designed as one element. Common reference numerals are used throughout the figures, where appropriate, to indicate similar features.

DETAILED DESCRIPTION

The following description is presented by way of example to enable a person skilled in the art to make and use the invention. The present invention is not limited to the embodiments described herein and various modifications to the disclosed embodiments will be apparent to those skilled in the art.

Embodiments will now be described by way of example only.

As described above, it desirable for instances executing a shader on a shader core at the same time (e.g. instances in a slot) to be able to efficiently exchange data with other instances in the slot. For example, an instance may, as part of executing an instruction of a shader, generate data which is used by one or more other instances in a subsequent instruction of a shader. For example, instance 0 may generate data 0 when it executes instruction 0 of a shader, data 0 may be used by instance 1 when it executes instruction 1 of that shader. Thus data 0 is sent to instance 1 (via a shuffle) before it executes instruction 1. Thus it is desirable to be able to shuffle data between instances running a shader at the same time (e.g. instances in a slot) in an efficient (e.g. high bandwidth and low latency) manner.

One way to speed up data exchange between instances would be to have a large crossbar that could dynamically connect the execution unit/instance private storage of any instance to the execution unit/instance private storage of any other instance in the slot. However, as the number of instances in a slot has increased, this becomes more expensive and difficult to implement in hardware. For example, in some cases a slot may have up to 128 instances and a 128-wide (or even a 64-wide) full crossbar would likely be prohibitively expensive to implement.

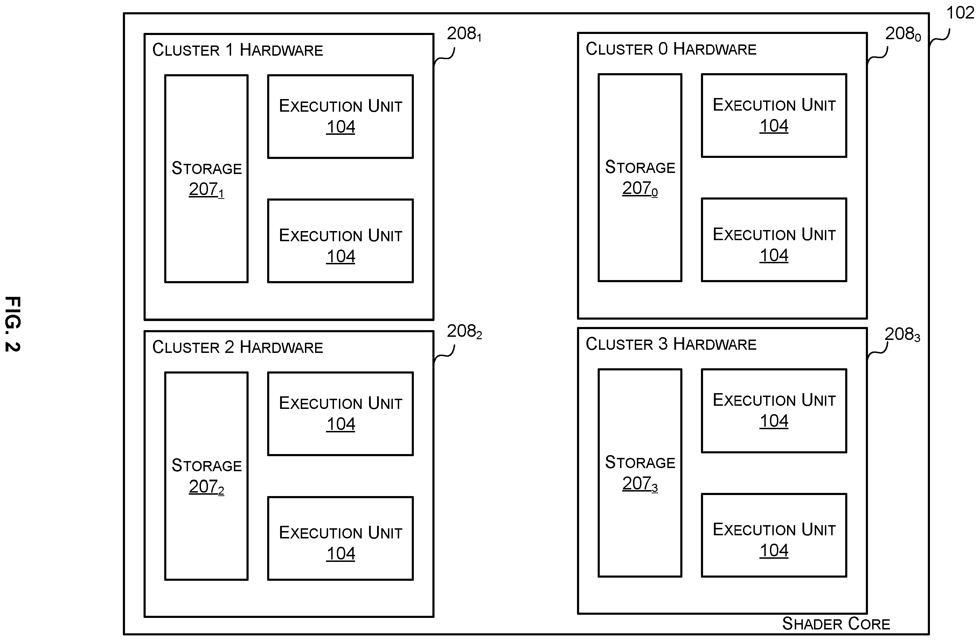

Furthermore, as shown in FIG. 2, a shader core 102 may be designed such that the instances in a slot are subdivided into clusters and the hardware for each cluster $208_0$, $208_1$, $208_2$, $208_3$ (e.g. the execution units 104 and instance private storage $207_0$, $207_1$, $207_2$, $207_3$ etc. for the instances in the cluster) is situated in a different location of the shader core layout. For example, a shader core that supports 128 instances in a slot may divide the 128 instances into 4 clusters of 32 instances wherein the hardware for each cluster $208_0$, $208_1$, $208_2$, $208_3$ is in a separate corner of the shader core layout. In some cases, each cluster may not comprise a block of 32 consecutive instances, but the instances may be allocated between the clusters in blocks of 8. Table 1 illustrates an example mapping of 128 instances to four clusters and how those instances are divided between two storage units per cluster (which are referred to as unified stores (US), and are identified as US0 and US1 in Table 1). When a shader core is configured in this manner a large crossbar (e.g. a 128-wide cross bar) that could dynamically connect an instance execution unit/instance private storage to any other instance execution unit/instance private storage would require (a) a large number of wires to cross the shader core and (b) a large number of many-input muxes to select data for each instance. The area cost of the wires and muxes would be prohibitively expensive and routing many inter-cluster wires would be difficult.

Table 1

| Cluster 0 | | Cluster 1 | | Cluster 2 | | Cluster 3 | |
|---|---|---|---|---|---|---|---|
| US0 | US1 | US0 | US1 | US0 | US1 | US0 | US1 |
| 0-7 | 32-39 | 16-23 | 48-55 | 8-15 | 40-47 | 24-31 | 56-63 |
| 64-71 | 96-103 | 80-87 | 112-119 | 72-79 | 104-111 | 88-95 | 120-127 |

Accordingly, the inventor has developed dedicated hardware for use in a shader core of a graphics processing unit, which is referred to herein as a shuffle accelerator, for shuffling data between instances within a slot over a plurality of phases. As is known to those of skill in the art, a hardware accelerator is hardware designed to perform a specific set of one or more functions more efficiently than a general processing unit, such as a central processing unit (CPU). Accordingly, in contrast to a general CPU which can be configured to perform any number of functions, an accelerator can only perform a limited set of one or more functions. The shuffle accelerators described herein are specially designed hardware to accelerate shuffles of data between instances executing a shader on a shader core at the same time (e.g. instances in a slot).

In each phase only a subset of the instances in a slot can receive data from a subset of the instances in the slot. The term "subset of X" is used herein to mean less than all of the elements of X. Accordingly, a subset of the instances in a slot means less than all of the instances in the slot. Table 2 shows an example set of phases for 128 instances which are distributed between clusters as set out in Table 1, wherein in each phase a set of 32 instances can receive data from a set of 32 instances. The instances that can receive data in a phase are referred to as the potential receive instances and the instances that can send data in a phase are referred to as the potential send instances. The instances that actually receive data in a phase are referred to herein as the receive instances for the phase, and the instances that actually send data in a phase are referred to herein as the send instances for the phase. The receive instances in a phase may be all or only a subset of the potential receive instances in the phase, and the send instances in a phase may be all or only a subset of the potential send instances in the phase.

The example set of phases in Table 2 maximises the bandwidth available between clusters as it allows each cluster to send data for 8 instances and receive data for 8 instances each phase. It will be evident to a person of skill in the art that this is only an example set of phases for 128 instances and that in other examples the exchange of data between instances may be split into phases in a different manner. For example, other shader cores may have a different number of instances per slot and those instances may be distributed amongst clusters differently.

Table 2

| Phase | Potential Send Instances | Potential Receive Instances |
|---|---|---|
| 0 | 0-31 | 0-31 |
| 1 | 0-31 | 32-63 |
| 2 | 0-31 | 64-95 |
| 3 | 0-31 | 96-127 |
| 4 | 32-63 | 0-31 |
| 5 | 32-63 | 32-63 |
| 6 | 32-63 | 64-95 |
| 7 | 32-63 | 96-127 |
| 8 | 64-95 | 0-31 |
| 9 | 64-95 | 32-63 |
| 10 | 64-95 | 64-95 |
| 11 | 64-95 | 96-127 |
| 12 | 96-127 | 0-31 |
| 13 | 96-127 | 32-63 |
| 14 | 96-127 | 64-95 |
| 15 | 96-127 | 96-127 |

Having dedicated hardware that can implement a shuffle of data between instances in a slot in phases allows a shuffle to be implemented across instances using a smaller crossbar or similar hardware, but much more efficiently than exchanging data via global memory, local memory or global or local atomics.

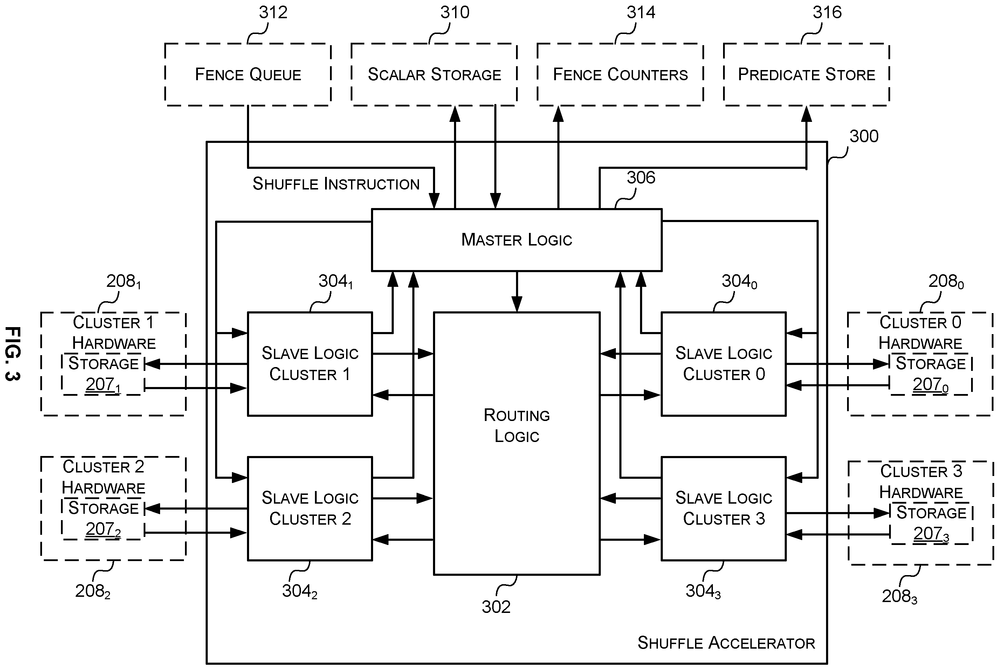

Reference is now made to FIG. 3 which illustrates a first example shuffle accelerator 300 for shuffling data, between instances executing a shader on a shader core, in a plurality of phases in which any instance in a slot can exchange data with any other instance in a slot. The example shuffle accelerator 300 comprises routing logic 302, slave logic $304_0$, $304_1$, $304_2$, $304_3$, and master logic 306.

The routing logic 302 is hardware that can selectively route data inputs to data outputs. The routing logic 302 of FIG. 3 comprises a single routing logic unit 302 that comprises a plurality of data input ports (which may also be referred to as data input lines or data input interfaces), a plurality of data output ports (which may also be referred to as data output lines or data output interfaces), and switching hardware (e.g. multiplexers and/or demultiplexers) that can selectively couple or connect data output ports to desired data input ports. The routing logic 302 allows data received on a data input port to be output on any of the data output ports. In some cases, the routing logic unit 302 may be implemented as a crossbar. A crossbar may comprise, for example, a multiplexer for each data output port that is connected to each data input port. As is known to those of skill in the art, a multiplexer is a hardware device that can select between several inputs and connect the selected input to the output. The selection is driven by one more select signals. As described in more detail below, the select signals may be generated by the slave logic $304_0$, $304_1$, $304_2$, $304_3$. However, it will be evident to a person of skill in the art that this is only an example implementation of the routing logic 302 and that the routing logic 302 may be implemented in any suitable manner. In general, the number of data input ports, and the number of data output ports, is less than the number of instances in a slot. For example, there may be 128 instances per slot and the routing logic 302 may comprise 32 data input ports and 32 data output ports. However, it will be evident to a person of skill in the art that this is an example only and the routing logic 302 may have any suitable number of data input ports and data output ports. In the examples described herein the number of data input ports is equal to the number of data output ports, however, in other cases, the number of data input ports may be different than the number of data output ports. In such cases, the number of phases to implement a shuffle may differ.

The slave logic $304_0$, $304_1$, $304_2$, $304_3$ has access to the private storage $207_0$, $207_1$, $207_2$, $207_3$ for the instances and is coupled to the data input ports and the data output ports of the routing logic 302. The slave logic $304_0$, $304_1$, $304_2$, $304_3$ can, as part of one transaction, read data from the corresponding instance private storage $207_0$, $207_1$, $207_2$, $207_3$ for a first set of instances, send the read data to one or more of the plurality of data input ports of the routing logic 302, receive data from one or more of the plurality of data output ports of the routing logic 302, and write the received data to private storage $207_0$, $207_1$, $207_2$, $207_3$ of a second set of instances.

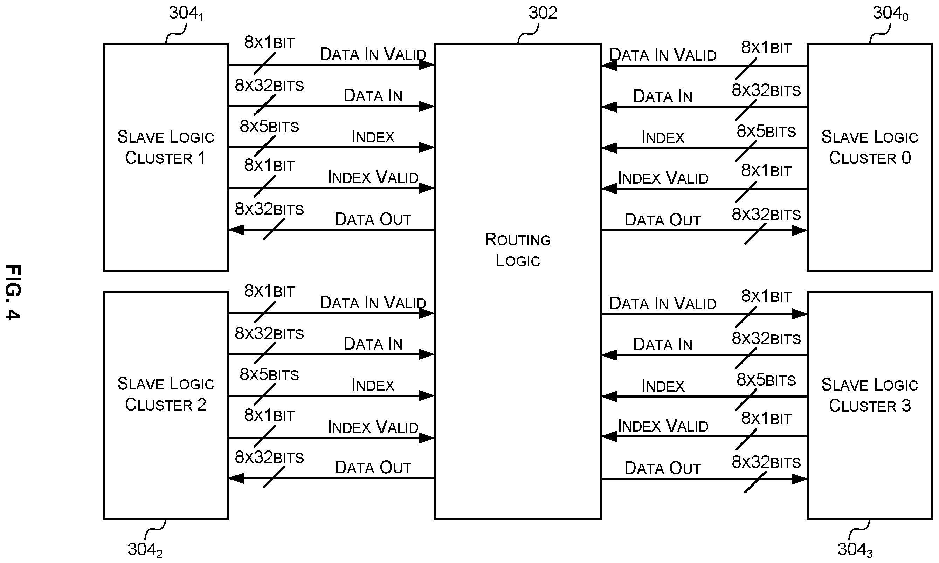

As described above, in some graphics processing units the instances in a slot of a shader core are divided into clusters and the hardware for each cluster $208_0$, $208_1$, $208_2$, $208_3$ (e.g. instance execution units and instance private storage $207_0$, $207_1$, $207_2$, $207_3$ (where collectively the instance private storage $207_0$, $207_1$, $207_2$, $207_3$ of the clusters form the instance private storage 106 of FIG. 1) is situated in a different location in the shader core layout (e.g. the hardware for each cluster may be in a separate corner of the shader core layout). In such cases, there may be a separate slave logic unit $304_0$, $304_1$, $304_2$, $304_3$ for each cluster that has access to the private storage $207_0$, $207_1$, $207_2$, $207_3$ for the instances of that cluster and is coupled to a subset of the data input ports and a subset of the data output ports. For example, if there are 128 instances that are divided into 4 clusters of 32 instances each, and the routing logic 302 has 32 data input ports and 32 data output ports then there may be four slave logic units $304_0$, $304_1$, $304_2$, $304_3$, one for each cluster, and, as shown in FIG. 4, each slave logic unit $304_0$, $304_1$, $304_2$, $304_3$ may be coupled to 8 data input ports and 8 data output ports. In such cases, collectively the slave logic units $304_0$, $304_1$, $304_2$, $304_3$ are referred to as the slave logic. While in FIG. 3 each slave logic unit $304_0$, $304_1$, $304_2$, $304_3$ is shown as being separate from the respective cluster hardware $208_0$, $208_1$, $208_2$, $208_3$, in other examples the slave logic unit $304_0$, $304_1$, $304_2$, $304_3$ for a cluster may form part of, or be integrated with, the cluster hardware $208_0$, $208_1$, $208_2$, $208_3$.

The master logic 306 is configured to receive a special shuffle instruction that identifies a shuffle of data between instances in a slot, and, in response to receiving such a shuffle instruction, cause the routing logic 302 and the slave logic $304_0$, $304_1$, $304_2$, $304_3$ to perform the identified shuffle in a plurality of phases, wherein in each phase a subset of the instances can receive data from a subset of the instances. As described above, the instances that can receive data in a phase are referred to herein as the potential receive instances for the phase, and the instances that can send data in a phase are referred to herein as the potential send instances for the phase. In a given phase the potential receive instances may also be the potential send instances, or these may differ. A shuffle instruction may be inserted into a shader when a shuffle is to be executed. When a shader core 102 encounters a shuffle instruction in a shader the shader core 102 may be configured to send the shuffle instruction to the shuffle accelerator 300, and specifically, the master logic 306 thereof, to execute the desired shuffle.

In some cases, where the routing logic unit 302 has S data input ports and R data output ports, each phase has a set of R potential receive instances (wherein a receive instance is an instance that receives data) and a set of S potential send instances (wherein a send instance is an instance that sends data) and any of the potential receive instances in a phase can receive data from any of the potential send instances in a phase. There may be a predefined set of possible phases that allow each instance in a slot to receive data from each other instance in a slot. The predefined set of possible phases may be generated by dividing the instances into non-overlapping subsets of S potential send instances and non-overlapping subsets of R potential receive instances, then defining a phase for each unique combination of potential send and receive subsets. For example, if there are 128 instances in a slot, numbered 0 to 127, 32 data input ports and 32 data output ports, then the instances may be divided into four non-overlapping potential send subsets of 32 instances - subset 0 (instances 0 to 31), subset 1 (instances 32 to 63), subset 2 (instances 64 to 93) and subset 3 (instances 94 to 127). As the number of data output ports matches the number of data input ports, the non-overlapping subsets of potential receive instances are the same as the subsets of potential send instances. In this example, to allow any instance to receive data from any other instance there may be 16 pre-defined possible phases as shown in Table 2. Specifically, the instances in each subset form the potential send instance for four phases wherein in each of those four phases the instances in a different subset form the potential receive instances. For example, for each of phases 0, 1, 2 and 3 in Table 2, subset 0 (instances 0 to 31) are the potential send instances, and in phase 0 the instances in subset 0 are the potential receive instances, in phase 1 the instances in subset 1 are the potential receive instances, in phase 2 the instances in subset 2 are the potential receive instances, and in phase 3 the instances in subset 3 are the potential receive instances. These four phases allow any of the instances in the slot to receive data from any instance in the first subset.

In some cases, the slave logic $304_0$, $304_1$, $304_2$, $304_3$ may always execute all possible phases for the instances in a slot. For example, if there are 16 predefined possible phases as set out in Table 2, then, in some cases, the slave logic $304_0$, $304_1$, $304_2$, $304_3$ may always execute all 16 phases. However, in some cases, not all of the phases may be needed.

For example, in some cases, the plurality of instances may be divisible into one or more equal-sized shuffle groups and the shuffle of data between the instances of the slots comprises a shuffle of data between instances within a shuffle group. For example, if there are 128 instances in a slot, there may be one shuffle group with 128 instances, there may be two shuffle groups with 64 instances each, there may be four shuffle groups with 32 instances each, and so on. In such cases, the shuffle instruction may comprise information indicating the shuffle groups for the shuffle. In some cases, the information indicating the shuffle groups for the shuffle may comprise information identifying the number of instances in each shuffle group. Where the number of instances per shuffle group can be a power of 2 (a number of the form $2^n$ where n is an integer; e.g. 1, 2, 4, 16, 32, 64, 128) then the information identifying the number of instances per shuffle group may be the base-2 logarithm of the number of instances per shuffle group. Using the base-2 logarithm of the number of instances per shuffle group to identify the number of instances per shuffle group allows the number of instances per shuffle group to be encoded more efficiently in the shuffle instruction (e.g. use fewer bits in the shuffle instruction) than explicitly specifying the number of instances per shuffle group.

Depending on the size of the shuffle group(s) not all of the possible phases (e.g., not all of the possible phases shown in Table 2) may be required to implement the shuffle. Specifically, if there are 128 instances in a slot, and each shuffle group has less than 128 instances, then the maximum number of phases to implement a shuffle may be less than 16. For example, if there are 32 instances in a shuffle group then each instance can only receive data from the 32 instances in the same shuffle group. If each shuffle group comprises a contiguous set of instances, this means that only four of the phases shown in Table 2 would be necessary to allow any instance in a shuffle group to receive data from any other instance in a shuffle group. The set of phases that allow every instance in a shuffle group of a shuffle to receive data from any other instance in the same shuffle group is referred to herein as the maximal set of phases for that shuffle. Table 3 illustrates the maximum number of phases for different shuffle group sizes when there are 128 instances per slot and in each phase 32 instances can receive data from 32 instances as shown in Table 2.

Table 3

| Shuffle Group Size | Maximum Number of Phases Required |
|---|---|
| 1 | 4 |
| 2 | 4 |
| 4 | 4 |
| 8 | 4 |
| 16 | 4 |
| 32 | 4 |
| 64 | 8 |
| 128 | 16 |

As described above, when there are 128 instances in a slot and there is a single shuffle group that comprises all 128 instances, then all sixteen possible phases shown in Table 2 are required to allow any instance in the shuffle group to receive data from any instance in the shuffle group. Where, however, each shuffle group comprises 64 consecutive or contiguously numbered instances then each subset of instances can only receive data from instances in that subset and instances in one other subset. For example, if one shuffle group comprises instances 0-63 then subset 0 (instances 0 to 31) can only receive data from the instances in subset 0 (instances 0 to 31) and subset 1 (instances 32 to 63). Thus only two phases are required per receive subset which results in 8 phases total. Similarly, where each shuffle group comprises 32 consecutive or contiguously numbered instances then each subset of instances can only receive data from instances in that subset. For example, if one shuffle group comprises instances 0-31 then subset 0 (instances 0 to 31) can only receive data from the instances in subset 0 (instances 0 to 31). Thus there is only one phase required for each receive subset which results in four phases total. For shuffle groups comprising less than 32 instances four phases are still required to enable any instance in a shuffle group to receive data from any instance in that shuffle group. Table 4 illustrates the phases of Table 2 which would be relevant to each of the shuffle group sizes shown in Table 3, wherein an "x" denotes that a phase is relevant to a shuffle with that shuffle group size and thus that phase forms part of the maximal set of phases for that size of shuffle group.

Table 4

| Phase | Shuffle Group Size | | | | | | | |
|---|---|---|---|---|---|---|---|---|
| | 1 | 2 | 4 | 8 | 16 | 32 | 64 | 128 |
| 0 | | | | x | | | x | x |
| 1 | | | | | | | x | x |
| 2 | | | | | | | | x |
| 3 | | | | | | | | x |

(continued)

| Phase | Shuffle Group Size | | | | | | | |
|---|---|---|---|---|---|---|---|---|
| | 1 | 2 | 4 | 8 | 16 | 32 | 64 | 128 |
| 4 | | | | | | | x | x |
| 5 | | | x | | | | x | x |
| 6 | | | | | | | | x |
| 7 | | | | | | | | x |
| 8 | | | | | | | | x |
| 9 | | | | | | | | x |
| 10 | | | x | | | | x | x |
| 11 | | | | | | | x | x |
| 12 | | | | | | | | x |
| 13 | | | | | | | | x |
| 14 | | | | | | | x | x |
| 15 | | | x | | | | x | x |

In some cases, the master logic 306 may provide the information identifying the shuffle groups to the slave logic $304_0$, $304_1$, $304_2$, $304_3$ so that the slave logic $304_0$, $304_1$, $304_2$, $304_3$ can identify the maximal set of phases for a shuffle. The slave logic $304_0$, $304_1$, $304_2$, $304_3$ may then only execute the maximal set of phases or a subset of the maximal set of phases.

Specifically, in some cases, not all of the phases in the maximal set of phases for a shuffle may be required to implement the shuffle. For example, if an instruction relates to a shuffle where there is a single shuffle group that comprises all 128 instances and all instances receive data from the same instance (e.g. a broadcast operation) then only 4 phases of the maximal set of 16 phases for the shuffle need to be executed. For example, if all instances are to receive data from instance 40, for example, then only phases 4, 5, 6 and 7 of Table 2 need to be executed to provide the data from instance 40 to all instances. Other examples where not all of the maximal set of phases may be required to implement a shuffle include a rotation or shift by 32, 64 or 96. Accordingly, in some cases, a shuffle instruction may comprise information indicating which of the maximal set of phases for a shuffle are not to be executed. In some cases, the information indicating which of the maximal set of phases for a shuffle are not to be executed may comprise a bit mask (which may be referred to as the phase mask) which comprises a bit for each possible phase (e.g. each phase in Table 2) and if a phase is not to be executed the bit may be set to a particular value (e.g. '0') and otherwise set to a different value (e.g. '1'). In some cases, the bits of the phase mask that correspond to phases that are not relevant to a shuffle (e.g. the phases that do not form part of the maximal set of phases for the shuffle due to the size of the shuffle group(s)) may be ignored. This information (e.g. phase mask) may be provided from the master logic 306 to the slave logic $304_0$, $304_1$, $304_2$, $304_3$ so that unnecessary phases are not executed. This can decrease the time and increase the efficiency of implementing certain shuffles.

As described above, a shuffle of data between instances in a slot comprises each of one or more instances receiving data from an identified instance. To identify a shuffle, the shuffle instruction may comprise information identifying the shuffle pattern (which instances are to receive data from which instances), information identifying the shuffle data (e.g. the location (e.g. register) in instance private storage of the data to be shuffled) and information identifying where the received data is to be stored (e.g. the location (e.g. register) in instance private storage where the received data is to be stored).

The master logic 306 may be configured to cause the slave logic $304_0$, $304_1$, $304_2$, $304_3$ and the routing logic 302 to perform the identified shuffle of data between instances in a plurality of phases by sending information (which may form part of a shuffle operation instruction) identifying the shuffle (e.g. information identifying the shuffle pattern, information identifying the shuffle data, and information identifying where the received data is to be stored) to the slave logic $304_0$, $304_1$, $304_2$, $304_3$. Where there is a slave logic unit $304_0$, $304_1$, $304_2$, $304_3$ per cluster then the same information identifying the shuffle may be sent to each slave logic unit $304_0$, $304_1$, $304_2$, $304_3$. In response to receiving the information identifying the shuffle, the slave logic $304_0$, $304_1$, $304_2$, $304_3$ may be configured to divide the shuffle into a plurality of phases and for each phase: (i) associate each send instance in the phase with a data input port of the routing logic 302 and associated each receive instance in the phase with a data output port of the routing logic 302; (ii) for each send instance in the phase, fetch shuffle data from the private storage of that instance; (iii) send the fetched shuffle data for each send instance to the corresponding data input port; (iv) cause the routing logic 302 to connect the data input ports to the data output ports in accordance with the shuffle pattern; (v) receive shuffle data for each receive instance in the phase on the corresponding data output port; and (vi) store the received data for each receive instance in the identified location in the instance private storage.

The send instances in a phase are the potential send instances of the phase that send data, and the receive instances in a phase are the potential receive instances in the phase that receive data. In some cases, all of the potential send instances of a phase are send instances in the phase. However, in other cases only as subset of the potential send instances of a phase may be send instances in the phase. Similarly, in some cases all of the potential receive instances in a phase may be receive instances in the phase. However, in other cases, only a subset of the potential receive instances may be receive instances in the phase. The send instances in a phase and the receive instances in a phase will be determined by (a) the phases; and (b) the shuffle pattern.

As noted above, the shuffle pattern for a shuffle identifies which instances are to receive data from which instances. For example, the shuffle pattern may specify that instance 0 receives data from instance 7 and instance 32 receives data from instance 99. Each receive instance for a shuffle has a specific send instance. The send instance for a receive instance may be identified by a unique number (e.g. index) associated with the send instance. The information in a shuffle instruction identifying the shuffle pattern for a shuffle may comprise information identifying the index of the send instance for each receive instance. In some cases, the information identifying the index of the send instance for each receive instance may comprise information identifying index data that is to be used to generate the index of the send instance for each receive instance. In some cases, the index data may comprise a single set of index data that is common to all receive instances or the index data may comprise index data for each receive instance. For example, in some cases a shuffle instruction may comprise a source index field, or the like, which identifies a location in storage which comprises the index data used to generate the index for the send instance for each receive instance. The storage location may be a location in common scalar storage 310 (if the index data is common to all receive instances), or instance-private storage (if the index data is specific to each receive instance).

In some cases, the slave logic $304_0$, $304_1$, $304_2$, $304_3$ may be configured to generate the index of the send instance for each receive instance from the identified index data and provide the relevant indices for each phase to the routing logic 302 as the control signals (e.g. select signals) for the routing logic 302 for that phase. In such cases, if the identified location of the index data is a common scalar storage 310 accessible to the master logic 306, the master logic 306 may fetch the index data from the common scalar storage 310 and provide the fetched data to the slave logic $304_0$, $304_1$, $304_2$, $304_3$ as part of, or along with, the information identifying the shuffle. In contrast, if the identified location of the index data is instance private storage $207_0$, $207_1$, $207_2$, $207_3$ then the master logic 306 may simply provide the slave logic $304_0$, $304_1$, $304_2$, $304_3$ with information identifying the location in the instance private storage $207_0$, $207_1$, $207_2$, $207_3$ of the index data. The slave logic $304_0$, $304_1$, $304_2$, $304_3$ may then, for each receive instance in a phase, retrieve the index data from the identified location in the instance private storage $207_0$, $207_1$, $207_2$, $207_3$ and generate an index for the send instance thereof based on the retrieved index data. Where there is a separate slave logic unit $304_0$, $304_1$, $304_2$, $304_3$ for each cluster, then each slave logic unit $304_0$, $304_1$, $304_2$, $304_3$ may generate the index of the send instance for only the receive instances in the phase that are in the associated cluster.

The index of the send instance for a receive instance may be generated from the identified index data in accordance with one of one or more supported index generation modes. Example index generation modes include, but are not limited to an absolute index generation mode, a relative index generation mode, and an XOR index generation mode. In the absolute index generation mode the index data identifies an absolute index within a shuffle group. Accordingly, for the absolute index generation mode the index of the send instance (SEND_IDX) for a receive instance may be generated in accordance with equation (1) where START_OF_GROUP is the index of the first instance in the shuffle group, SRC_IDX is the index data used to generate the index, and GROUP_SIZE is the size of the shuffle group.

$$\text{SEND\_IDX} = (\text{START\_OF\_GROUP} + \text{SRC\_IDX}) \text{ MOD GROUP\_SIZE} \quad (1)$$

In the relative index generation mode the index data identifies an index relative to the receive instance's index. Accordingly, for the relative index generation mode the index of the send instance (SEND_IDX) for a receive instance may be generated in accordance with equation (2) where START_OF_GROUP is the index of the first instance in the shuffle group, SRC_IDX is the index data used to generate the index, IDX_IN_GROUP is the index of the receive instance in the shuffle group, and GROUP_SIZE is the size of the shuffle group.

$$\text{SEND\_IDX} = \text{START\_OF\_GROUP} + ((\text{IDX\_IN\_GROUP} + \text{SRC\_IDX}) \text{ MOD GROUP\_SIZE}) \quad (2)$$

In the XOR index generation mode the index data is XOR'd with the index of the receive instance to generate the index of the send instance. Accordingly, for the XOR index generation mode the index of the send instance (SEND_IDX) for each receive instance may be generated in accordance with equation (3) where START_OF_GROUP is the index of the first instance in the shuffle group, SRC_IDX is the index data used to generate the index, IDX_IN_GROUP is the index of the receive instance, and GROUP_SIZE is the size of the shuffle group.

$$\text{SEND\_IDX} = \text{START\_OF\_GROUP} + ((\text{IDX\_IN\_GROUP XOR SRC\_IDX}) \text{ MOD GROUP\_SIZE}) \quad (3)$$

For equations (1), (2) and (3), if the shuffle instruction identifies the number of instances per shuffle group by identifying the group size log 2 (GROUP_SIZE_LOG2) then GROUP_SIZE may be generated by shifting the value "1" left by GROUP_SIZE_LOG2 bits. For equations (1), (2) and (3), START_OF_THE GROUP may be equal to SLOT_INSTANCE & ~(GROUP_SIZE-1) and IDX_IN_GROUP may be equal to SLOT_INSTANCE & (GROUP_SIZE -1), where SLOT_INSTANCE is the index of an instance within its Slot, "&" is the "logical AND" operation and "~" is the "logical negation" operation.

The shuffle accelerator 300 may support any combination of the index generation modes described above, additional index generation modes or a different set of index generation modes. Where the shuffle accelerator 300 supports multiple index generation modes then a shuffle instruction may comprise information identifying the index generation mode of the plurality of supported index generation modes that is to be used to generate the indices of the send instances. Where the slave logic $304_0$, $304_1$, $304_2$, $304_3$ generates the indices, the master logic 306 may be configured to provide information identifying the identified index generation mode to the slave logic $304_0$, $304_1$, $304_2$, $304_3$ (e.g. as part of a shuffle operation instruction).

In some cases, it may not be necessary for each instance in a slot to receive data in a shuffle. Accordingly, in some cases, a shuffle instruction may comprise information that identifies which instances are not to receive data in the shuffle. In some cases, the information identifying which instances are not to receive data in a shuffle may be a bit mask (which may be referred to as a data write enable mask) in which there is a bit for each instance that indicates whether that instance is to receive data in the shuffle or not. However, in other cases, to reduce the number of bits in the shuffle instruction for this information, the information identifying which instances are not to receive data in a shuffle may simply identify one of a predefined set of data write enable masks. For example, if there are 128 instances per slot, instead of having a 128-bit mask in the shuffle instruction, the shuffle instruction can use only log2 (number of different masks) bits to uniquely identify a data write enable mask. For example, there may be a number of predetermined data write enable masks that are likely to be used for known operations. Example masks which may be used include, but are not limited to, a mask that indicates that the first instance of every two instances is to receive data, a mask that indicates that the first instance in every four instances is to receive data, a mask that indicates that the first instance in every eight instances is to receive data, a mask that indicates that the last instance in every two instances is to receive data, a mask that indicates that the last instance in every four instances is to receive data, a mask that indicates that the last instance in every eight instances is to receive data etc.

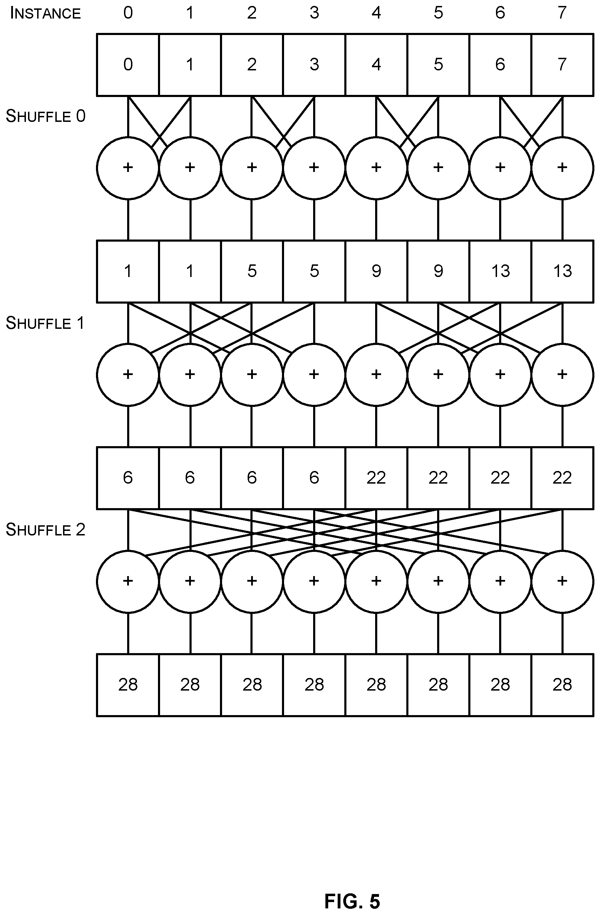

Being able to identify which instances will not receive data for a shuffle may allow some operations to be performed more efficiently in terms of power and computation time. For example, a fast, but power inefficient way to implement a reduction over eight instances (where the result for each instance is the sum of input values across instances) is to have, in each stage, each instance receive data from another instance and perform an addition. Thus each stage would require a shuffle in which all instances receive data from another instance (implemented via a shuffle instruction for example) followed by an addition (implemented via an addition instruction, for example). This is illustrated in FIG. 5. It can be seen from FIG. 5 that in this implementation there are 3*8=24 addition operations plus register accesses to sum 8 values.

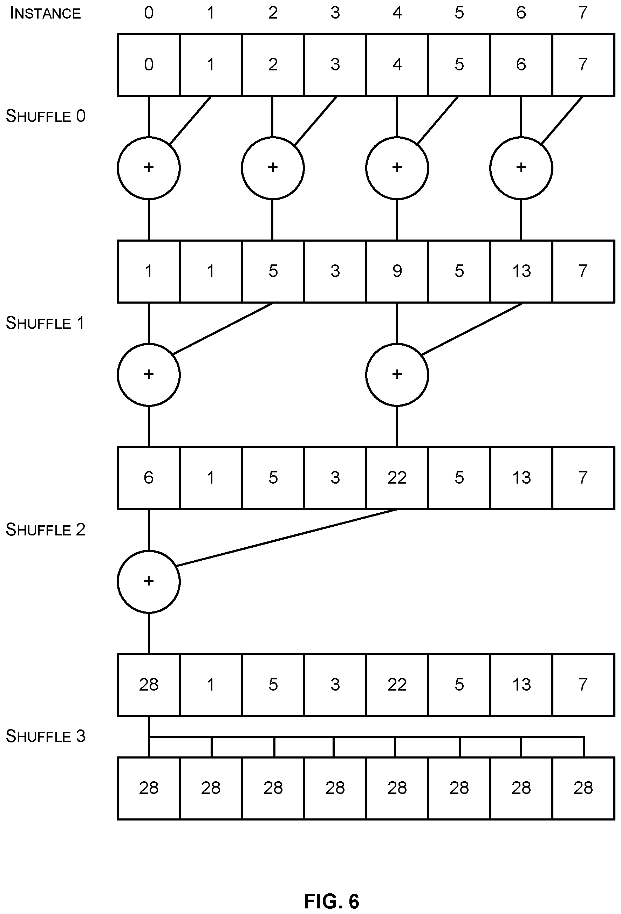

This could be implemented more efficiently via a binary tree in four stages as shown in FIG. 6. In the first stage there are 4 instances active, in the second stage there are 2 instances active, in the third stage there is only 1 instance active, and in the fourth stage a broadcast is made to all of the instances. This requires only 7 additions which is the minimum number of additions. Thus, this saves a lot of power compared to the method shown in FIG. 5. This could be implemented by: indicating in the shuffle instruction for the first shuffle (shuffle 0) that only instances 0, 2, 4 and 6 are to receive data; indicating in the shuffle instruction for the second shuffle (shuffle 1) that only instances 0 and 4 are to receive data; indicating in the shuffle instruction for the third shuffle (shuffle 2) that only instance 0 is to receive data; and indicating in the shuffle instruction for the fourth shuffle (shuffle 3) that all instances are to receive data.

Where a shuffle instruction identifies instances that are not to receive data in the shuffle, the master logic 306 may provide this information to the slave logic $304_0$, $304_1$, $304_2$, $304_3$ and/or the routing logic 302 so that, if a receive instance in a phase is identified as not receiving data, the hardware associated with that instance can be disabled (e.g. clock gated) in that phase to save power. For example, if a shuffle instruction indicates that instance 35 is not to receive data in the shuffle then in phases 1, 5, 9 and 13 the slave logic $304_0$, $304_1$, $304_2$, $304_3$ and/or the routing logic 302 may disable the hardware associated with instance 35.

While a shader core may be able to execute a shader for a predetermined number of instances (e.g. 128) at the same time (e.g. in the same slot) not every instruction of the shader may be executed for each possible instance. For example, in some cases, before a shader is executed it may be determined using one or more criteria which of the instances will be active for the shader and active information may be generated that indicates which of the instances are not active for the shader. A non-active instance will not execute any instructions of a shader whereas an active instance may execute one or more instructions of a shader. In these cases, prior to sending a shuffle instruction to the master logic 306, it may be determined (e.g. by a fence queue 312, wherein the fence queue 312 receives instructions and only dispatches those instructions when it has been determined that all data hazards related to that instruction have been cleared; data hazards may be tracked using fence counters 314) from the active information which instances in a slot are not to execute the shuffle instruction and this information may be provided to the master logic 306 along with the shuffle instruction. The master logic 306 may then provide this information to the slave logic $304_0$, $304_1$, $304_2$, $304_3$ (e.g. as part of a shuffle operation instruction) and/or the routing logic 302 so that in each phase the hardware associated with the instances that will not execute the shuffle can be disabled. A non-active instance for a shader cannot send data nor can it receive data in a shuffle instruction for that shader.

In some cases, it may also be possible to dynamically disable instances on a per instruction basis. This may be referred to as predication. In such cases, predicate information is stored (e.g. in a predicate store 316) and dynamically updated during a shader, and, prior to executing an instruction, it may be determined whether the predicate information is to be used to determine which instances are to execute the instruction. If it is determined that the predicate information is to be used to determine which instances are to execute the instruction, the predicate information is analysed to determine which active instances are not to execute the instruction (a non-active instance cannot be re-activated by the predicate information). For example, an instruction may comprise a condition control (CC) field that indicates whether predicate information should be used to determine which instances are to execute the instruction and, if so, what the values of the predicate information should be for an instance to execute an instruction. An instance that does not execute an instruction based on the predicate information is said to be predicated out.

Where predication is implemented, prior to sending a shuffle instruction to the master logic 306, it may be determined (e.g. by the fence queue 312) whether the predicate information is to be used to enable/disable an instance, and, if so, analyse the predicate information to identify instances that have been predicated out. A complete list of instances that are to not execute the shuffle instruction (e.g. a bitmask) may then be generated based on the list of instances predicated out and the list of non-active instances. In such cases, it may be this complete list of instances that are not to execute the shuffle instruction (which may be referred to as the non-executing instances) that is provided to the master logic 306 along with the shuffle instruction. The master logic 306 may then provide this complete list to the slave logic $304_0$, $304_1$, $304_2$, $304_3$ (e.g. as part of a shuffle operation instruction) and/or the routing logic 302.

In general, when predication is supported, special predicate update instructions are inserted into the shader to dynamically update the predicate information during execution of the shader. As noted above, in some cases, a shuffle instruction may specify which instances are to receive data in a shuffle. In some situations, it may be known that only the instances that receive data in a shuffle are to execute a subsequent instruction. For instance, as shown in FIG. 6, only the instances that receive data in shuffles 0, 1 and 2 will execute the immediately following addition. For example, in the first shuffle (shuffle 0) only instances 0, 2, 4 and 6 receive data and only instances 0, 2, 4 and 6 perform the subsequent addition. In such cases, instead of having a separate instruction in the shader to update the predicate information after a shuffle, the master logic 306 can directly update the predicate information (e.g. in the predicate store 316) to indicate that each instance that is not receiving data in the shuffle (as indicated by the data write enable information) is not to execute the subsequent instruction. This predicate update may be enabled or disabled on a per shuffle instruction basis. For example, in some cases, the shuffle instruction may comprise information (which may be referred to as the predicate write enable information) that indicates that the predicate information is to be updated to indicate that each instance that that is not receiving data in the shuffle is not to execute the subsequent instruction. In such cases, when the master logic 306 receives an instruction that indicates that the predicate information is to be updated, the master logic 306 updates the predicate information (e.g. the predicate information stored in the predicate store 316) to indicate that each instance that is not receiving data in the shuffle (as indicated by the data write enable information) is not to execute a subsequent instruction (e.g. is to be predicated out).

As described above, receive instances in a shuffle can receive data from an identified send instance. In some cases, if the identified send instance is not executing the shuffle instruction (e.g. because it is not an active instance or because it has been predicated out) the shuffle accelerator 300 may be configured to provide the receive instance with a known value, which may be referred to as the identity value. In some cases, the identity value may be configurable on a per shuffle instruction basis. In such cases, the shuffle instruction may comprise information identifying the identity value. In some cases, the information identifying the identity value may comprise the identity value itself. In other cases, the information identifying the identity value may comprise one of: (1) information identifying a location in storage (e.g. a location in the scalar storage 310) accessible to the master logic 306 where the identity value is stored, and (2) information identifying one or more predefined identity values. For example, a plurality of predefined identity values may be assigned a unique identifier or index and one of the predetermined identity values can be identified by including its unique identifier or index in the shuffle instruction. Encoding the possible identity values in the shuffle instruction using unique identifiers or indices, rather than including the identity value itself, can reduce the number of bits in the shuffle instruction used to identify the identity value. It is expected that in most cases, the identity value will be one of a fixed set of identity values useful for implementing application programming interface (API) operations. The ability to identify a location in storage in which the identity value is stored provides the programmer of a shader with the ability to use an unusual or unexpected identity value.

Where the shuffle instruction identifies an identity value then the master logic 306 may provide information identifying the identity value to the routing logic 302 and/or the slave logic $304_0$, $304_1$, $304_2$, $304_3$ so that the identity value can be provided to a receive instance that is to receive data from an invalid send instance (i.e. a send instance that is not executing the shuffle instruction). Where a shuffle instruction identifies a unique identifier of a predetermined identity value then the master logic 306 may provide the unique identifier to the routing logic 302 and/or the slave logic $304_0$, $304_1$, $304_2$, $304_3$. Where, however, a shuffle instruction identifies a location in storage accessible to the master logic 306 in which the identity value is stored then the master logic 306 may retrieve the identity value from the identified location in storage and provide the retrieved identity value to the routing logic 302 and/or the slave logic $304_0$, $304_1$, $304_2$, $304_3$. In some cases, where the slave logic $304_0$, $304_1$, $304_2$, $304_3$ determines the indices of the send instances for the receive instances, the slave logic $304_0$, $304_1$, $304_2$, $304_3$ may be configured to, when it determines, from the information received from the master logic 306 indicating the non-executing instances for the shuffle instruction, that a send instance for a receive instance relates to a non-executing instance, provide/write the identity value to the receive instance. In such cases, the master logic 306 may provide the identity value to the slave logic $304_0$, $304_1$, $304_2$, $304_3$. In other cases, the routing logic 302 may be configured to monitor the send instance indices received from the slave logic $304_0$, $304_1$, $304_2$, $304_3$ and if it determines, from the information received from the master logic 306 indicating the non-executing instances for the shuffle instruction, that an index relates to a non-executing instance, provide the identity value to the receive instance on a data output port associated with the receive instance. The latter case allows the slave logic to be simpler as the slave logic does not have to analyse the indices of the send instances and will always write the data received from the routing logic for a receive instance to that instance's private storage.

In some cases, multiple shuffles may be triggered with a single shuffle instruction. Specifically, in some cases, a shuffle with the same shuffle pattern may be performed multiple times on different instance data. For example, it is quite common for each instance to generate a vector with multiple elements. The elements of the vector may be stored in consecutive locations in the instance's private storage. Since each element is in a different location in an instance's private storage, if the vector is to be shuffled between instances it would normally take Z shuffle instructions to transfer the entire vector in which each shuffle instruction specifies different source and destination locations, wherein Z is the number of elements in the vector. Although each of the Z shuffle instructions will implement the same shuffle pattern (e.g. for each shuffle, instance 0 may receive data from instance 5, and instance 6 may receive data from instance 7) the indices will be separately computed for each shuffle instruction.

Accordingly, to reduce the number of shuffle instructions to implement such a shuffle (e.g. a shuffle of a vector) and to increase the efficiency of implementing such a shuffle, in some cases the shuffle accelerator 300 may support a shuffle burst in which multiple shuffles are triggered with a single shuffle instruction. In each shuffle of a burst the same shuffle pattern is used. In such cases, a shuffle instruction may specify whether the instruction relates to a shuffle burst and the number of shuffles that are to be performed as part of the burst. For example, a shuffle instruction may comprise shuffle burst length information that indicates the number of shuffles that are to be performed. If the shuffle burst length indicates that more than one shuffle is to be performed then the shuffle instruction relates to a shuffle burst and the master logic 306 causes the routing logic 302 and the slave logic $304_0$, $304_1$, $304_2$, $304_3$ to perform the identified number of shuffles, each with the same shuffle pattern. The master logic 306 may cause the routing logic 302 and the slave logic $304_0$, $304_1$, $304_2$, $304_3$ to perform the identified number of shuffles with the same pattern by sending a shuffle operation instruction to the slave logic $304_0$, $304_1$, $304_2$, $304_3$ for each shuffle in the burst that indicates that shuffle operation instruction relates to the same shuffle burst. This means that, if the slave logic $304_0$, $304_1$, $304_2$, $304_3$ generates the send instance indices, the slave logic $304_0$, $304_1$, $304_2$, $304_3$ only has to generate the indices once and then can use the same indices for each shuffle in the shuffle burst.

A shuffle burst may be configured to transfer data in consecutive locations in storage. Accordingly, the master logic 306 may also be configured to update (e.g. increment) the source and destination storage information for each shuffle operation instruction in the burst. For example, if the shuffle instruction received at the master logic 306 indicates that the source storage is register 0 of the instance private storage and the destination storage is register 50 of the instance private storage then the first shuffle operation instruction sent to the slave logic $304_0$, $304_1$, $304_2$, $304_3$ as part of a burst may indicate that the source storage is register 0 and the destination storage is register 50, the second shuffle instruction operation in the burst may indicate that the source storage is register 1 and the destination storage is register 51, the third shuffle instruction operation in the burst may indicate the source storage is register 2 and the destination storage is register 52 etc.

In some cases, each data input port and each data output port of the routing logic 302 may be M bits wide (i.e. each data input port and each data output port can receive M-bit data elements), wherein M is an integer greater than or equal to one. In some cases, M is equal to 32. However, it will be evident to a person of skill in the art that this is an example only and that M may be any suitable integer. In some cases, when M is greater than or equal to two, the data that is being exchanged in a shuffle may be less than M bits - i.e. not all of the M bits will contain useful information. In such cases, it may be efficient to disable the hardware of the routing logic 302 and/or slave logic related to the unused bits. Accordingly, in some cases, the shuffle instruction may comprise information indicating whether the shuffle data is less than M bits. In some cases, where M is an even integer greater than or equal to 2, the information indicating whether the shuffle data is less than M bits may indicate whether the shuffle data is M bits (e.g. 32 bits) or M/2 bits (e.g. 16 bits)), and if only M/2 bits (e.g. 16 bits) will be used, indicates whether it will be the most significant M/2 bits or the least significant M/2 bits that will be used. In other cases, where M is greater than two, the M bits may be divided into more than two blocks (e.g. 4 blocks of 8 bits each) and the information indicating whether the shuffle data is less than M bits may comprise, for example, a mask indicating which of the blocks will be used. For example, where M is equal to 32, the mask may indicate that the first 8 bit block and the last 8 bit block will be used; that the first and second 8 bit blocks will be used; or that only the third 8-bit block is to be used. In yet other cases, the information indicating whether the shuffle data is less than M bits may indicate a log2 encoding or an enumerated encoding of the number of least significant bits that are to be used. When the master logic 306 receives a shuffle instruction that indicates that the shuffle data is less than M bits, the master logic 306 may provide this information to the slave logic $304_0$, $304_1$, $304_2$, $304_3$ and/or the routing logic 302 so that the hardware associated with the unused bits may be disabled. In some cases, the master logic 306 may provide this information to the slave logic $304_0$, $304_1$, $304_2$, $304_3$ and the slave logic $304_0$, $304_1$, $304_2$, $304_3$ may provide this information to the routing logic 302.

It may be desirable, when there are multiple slave logic units $304_0$, $304_1$, $304_2$, $304_3$, for all of the slave logic units $304_0$, $304_1$, $304_2$, $304_3$ to send data (and optionally indices) for the same phase to the routing logic 302 in the same cycle. However, it is possible for the clusters to get out of sync. For example, a data fetch may cause a register file bank clash in one cluster and no register file bank clash in the other clusters. In some cases, to ensure that all slave logic units $304_0$, $304_1$, $304_2$, $304_3$ send data for the same phase to the routing logic 302 in the same cycle the master logic 306 may be configured to synchronise the operation of the slave logic units $304_0$, $304_1$, $304_2$, $304_3$. For example, the slave logic units $304_0$, $304_1$, $304_2$, $304_3$ may be configured to notify the master logic 306 if they experience/encounter a delay (e.g. bank clash) and the master logic 306 may be configured to notify the other slave logic units $304_0$, $304_1$, $304_2$, $304_3$ of the delay so that they will implement a corresponding delay before sending data to the routing logic 302.

In some cases, the phases may be executed in an order such that phases that have the same set of send instances are executed consecutively. For example, the phases shown in Table 2 may be executed in the order in which they are listed in the table. This is more power efficient than switching between phases with different potential send instances because it means that the shuffle data for each send instance only needs to be read once from instance private memory and then that same shuffle data can be sent to the routing logic 302 for multiple consecutive phases, reducing toggling through the routing logic and slave logic and its data buses.

In some cases, the slave logic units $304_0$, $304_1$, $304_2$, $304_3$ are configured to implement each phase in a pipelined manner. This allows multiple phases to be executed concurrently which can increase the speed at which the phases, and thus a shuffle, can be executed. For example, the slave logic units $304_0$, $304_1$, $304_2$, $304_3$ may be configured to fetch shuffle data for a phase in one cycle (or one set of cycles) and then send the fetched shuffle data to the routing logic 302 in a subsequent cycle (or in a subsequent set of cycles) while also fetching the shuffle data for the next phase. Configuring the slave logic units $304_0$, $304_1$, $304_2$, $304_3$ in this manner means that the slave logic units $304_0$, $304_1$, $304_2$, $304_3$ are not reserved for one phase at a time.

Table 5 shows a set of example fields, based on the above, which a shuffle instruction may comprise. It will be evident based on the above that this is just an example set of fields that a shuffle instruction may comprises and other shuffle instructions may only have a subset of the fields in Table 5, additional fields and/or separate fields.

Table 5

| Shuffle Instruction Field | Number of Bits | Description |
|---|---|---|
| DST_BASE | 9 | This field identifies the location (e.g. register) in instance private storage where the received data is to be stored. This may be referred to as the destination location.<br><br>Each instance stores the data in the same location (e.g. register) in its private storage (e.g. each instance stores the received data in register 5). |
| SRC_DATA_BASE | 9 | This field identifies the location (e.g. register) in instance private storage in which the data that is to be shuffled (i.e., the shuffle data) is stored. This may be referred to as the source location.<br><br>Each instance stores the data to be shuffled (i.e., the shuffle data) in the same location (e.g. register) of its private storage (e.g. each instance stores the data to be shuffled in register 10) |

(continued)

| Shuffle Instruction Field | Number of Bits | Description |
|---|---|---|
| SRC_IDX | 10 | This field identifies where the data used to generate the index (i.e., the index data) for the send instance for each receive instance is located.<br>This field may identify a location in storage that is common to the instances (indicating there is a SRC_IDX value for all instances) or a location in instance private storage (indicating that there is a SRC_IDX value per instance). |
| SRC_IDENT | 10 | This field identifies the identity value.<br>This field may identify a location in storage common to the instances in which the identity value is stored or identify a unique identifier associated with one of a plurality of predetermined identity values. |
| IDX_MODE | 2 | This field identifies the index generation mode of a plurality of index generation modes to be used to generate the index of the send instance for each receive instance.<br>In one example, the plurality of index generation modes comprises absolute index generation mode, relative index generation mode and XOR index generation mode. |
| BST_LEN | 2 | This field identifies the number of shuffles in a shuffle burst.<br>Since you couldn't have a burst length of 0, in some cases this could be encoded as the number of shuffles in a shuffle burst less 1. This would allow the number of shuffles in the burst to be $(2 << N) + 1$ wherein N is the number of bits used to encode the BST_LEN field. In such cases, the field may be renamed BST_LEN_M1. |
| GROUP_SIZE_LOG2 | 3 | This field identifies the size of each shuffle group, and specifically the base-2 logarithm of the number of instances per shuffle group.<br>In one example, the following number of instances per shuffle group is supported: 1, 2, 4, 8, 16, 32, 64, 128. |
| PHASE_MASK | 16 | This field identifies which phases of the possible phases (e.g. the phases in Table 2) are not to be executed for a shuffle.<br>There may be a bit for each possible phase that indicates whether that phase is to be executed for the shuffle. |
| ELEM_MASK | 2 | This field indicates which bits of the possible M bits/shuffle data are to be used for the shuffle data.<br>This field may indicate whether the data being transferred is M bits or M/2 bits, and if M/2 bits whether the LSBs or the MSBs are used, wherein M is the bit width of each data input port and data output port.<br>Where M=32 bits, "01" may indicate that the 16 LSBs are to be used, "10" may indicate that the 16 MSBs are to the used, and "11" may indicate that all 32-bits are to be used. |
| DWEN | 8 | This field identifies which instances are to write data back (i.e., which instances are to receive data in the shuffle).<br>The field may identify a bit mask that identifies which instances are to write data back. In some cases, this field may comprise a unique identifier which identifies one of a plurality of predetermined bit masks. |
| PWEN | 1 | This field indicates that the bit mask identified in the DWEN field should be used to update the predicate information. |

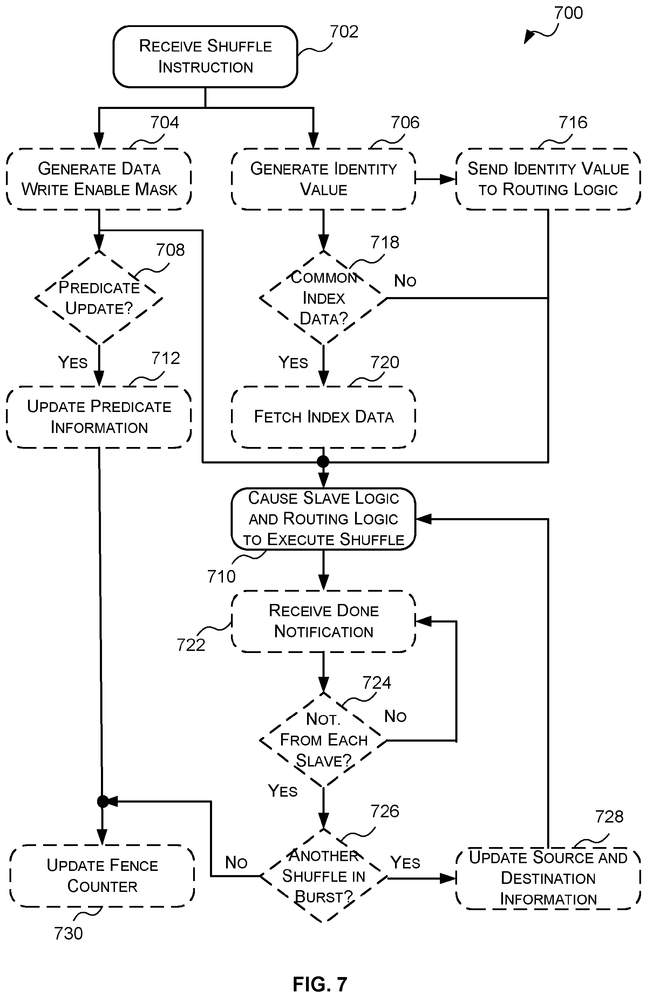

Reference is now made to FIG. 7 which illustrates an example method 700 which may be implemented by the master logic 306 of FIG. 3. In FIG. 7 a circle linking blocks of the method 700 is used to indicate that all the blocks shown as an input to the circle are to be completed prior to executing the block shown as an output of the circle. For example, blocks 704, 720 and 716 are shown as an input to a circle and thus each of blocks 704, 720 and 716 are to be completed prior to executing block 710 which is the output of the circle.

The method 700 begins at block 702 where the master logic 306 receives a shuffle instruction which identifies a shuffle of data between instances in a slot executing a shader on a shader core. As described above, to identify the shuffle, the shuffle instruction may comprise: information identifying the shuffle pattern (e.g. the shuffle instruction may comprise information (e.g. a SRC_IDX field) that identifies the data (e.g. index data) from which the index of the send instance of each receive instance can be determined); information identifying the data of the send instances that is to be shuffled (e.g. the shuffle instruction may comprise information (e.g. a SRC_DATA_BASE field) that identifies the location in instance private storage where the shuffle data is stored); and information identifying where the received data for each receive instance is to be stored (e.g. the shuffle instruction may comprise information (e.g. a DST_BASE field) that identifies a location in instance private storage in which the received data for a receive instance is to be stored).

As described above, in some cases, the shuffle instruction may comprise one or more pieces of additional information. For example, the shuffle instruction may, in some cases, also comprise: information (e.g. a SRC_IDENT field) identifying an identity value; information (e.g. a IDX_MODE field) indicating which of a plurality of index generation modes is to be used to generate the send instance indices; information (e.g. a BST_LEN field) identifying whether the instruction relates to a shuffle burst and, if so, the number of shuffles in the burst; information (e.g. a GROUP_SIZE_LOG2 field) identifying each shuffle group (e.g. the information may identify the number of instances per shuffle group); information (e.g. a PHASE_MASK field) identifying which of the possible phases are not to be executed for the shuffle; information (e.g. an ELEM_MASK field) indicating the number of bits used for each shuffle data element; information (e.g. a DWEN field) indicating which instances are not to receive data in the shuffle; and/or information (e.g. a PWEN field) indicating that the predicate information is to be updated to reflect the instances that do not receive data in the shuffle. As described above, in some cases, along with the shuffle instruction, the master logic 306 may also receive (e.g., as instruction metadata or sideband data) information identifying which instances are not executing the shuffle instruction. As noted above this information may be generated from active information for the shader and/or predicate information. Once the shuffle instruction has been received, the method 700 proceeds to blocks 704 and 706.

Block 704 may be executed if the shuffle instruction comprises information (e.g. a DWEN field) identifying which instances are not to receive data in the shuffle. Specifically, at block 704, the master logic 306 generates a data write enable mask from the information identifying which instances are not to receive data in the shuffle. A data write enable mask comprises a bit for each instance that indicates whether that instance is not to write data. For example, if there are 128 instances in a slot then a data write enable mask comprises 128 bits. Where the information in the shuffle instruction identifying which instances are not to receive data in the shuffle comprises a data write enable mask then at block 704 the master logic 306 may simply extract the data write enable mask from the shuffle instruction. Where, however, the information identifying which instances are not to receive data in the shuffle comprises a unique identifier or index for one of a plurality of predefined data write enable masks, at block 704 the master logic 306 may generate the data write enable mask identified in the shuffle instruction. Once the data write enable mask has been generated the method 700 proceeds to blocks 708 and 710.

Block 708 may be executed if the shuffle instruction comprises information (e.g. a DWEN field) identifying which instances are not to receive data in the shuffle, and information (e.g. a PWEN field) indicating whether the predicate information should be updated to specify that the instances that are not receiving data are not to execute a subsequent instruction. Specifically at block 708, the master logic 306 determines whether the shuffle instruction indicates that the predicate information should be updated. If the shuffle instruction indicates that the predicate information is to be updated, then the method 700 proceed to block 712. If, however, the shuffle instruction indicates that the predicate information is not to be updated, then this part of the method 700 may end or the method 700 may proceed to block 730.

At block 712, the master logic 306 updates the predicate information (e.g. the predicate information in the predicate store 316) to indicate the instances which are not to receive data in the shuffle are not to execute a subsequent instruction. Where a data write enable mask was generated in block 704 then updating the predicate information may comprise replacing the predicate information (e.g. the predicate information in the predicate store 316) with the data write enable mask. Once the predicate information has been updated, the method 700 proceeds to block 730.

Block 706 may be executed if the shuffle instruction comprises information (e.g. a SRC_IDENT field) identifying an identity value. Specifically, at block 706, the master logic 306 generates an identity value from the information in the shuffle instruction identifying an identity value. As described above, the identity value is a value that is provided to a receive instance that attempts to receive data from an invalid send instance (e.g. a send instance that is not executing the shuffle). Where the information in the shuffle instruction identifying the identity value comprises the identity value then at block 706 the master logic 306 may simply extract the identity value from the shuffle instruction. Where, however, the information in the shuffle instruction identifying the identity value comprises a unique identifier or index for one of a plurality of predefined identity values, at block 706 the master logic 306 may generate the identity value identified in the shuffle instruction. Where, however, the information identifying the identity value comprises information identifying a location in common storage (e.g. scalar storage 310) where the identity value is stored, at block 706 the master logic 306 may fetch the identity value from the identified location in the common storage (e.g. scalar storage 310) to generate the identity value. Once the identity value has been generated, the method 700 proceeds to blocks 716 and 718.

At block 716, the master logic 306 provides the identity value generated in block 706 to the routing logic 302. In other examples, the identity value may also or alternatively be provided to the slave logic. In other examples, if the information identifying the identity value comprises a unique identifier or index of one of a plurality of predefined identity values, the master logic 306 may provide the unique identifier or index to the routing logic 302 and/or the slave logic. Once the identity value has been provided to the routing logic 302 the method 700 proceeds to block 710.

Block 718 is executed if (a) the shuffle instruction comprises information (e.g. a SRC_IDX field) that identifies a location in which the index data used to generate the indices for the send instances is stored, and (b) the location can be either common storage (indicating there is a single index data that is common to all instances) or instance private storage (indicating there is index data for each instance). Specifically, at block 718, the master logic 306 determines whether the shuffle instruction indicates that the index data for the shuffle is located in common storage. If the shuffle instruction indicates that the index data is located in common storage then the method 700 proceeds to block 720. If, however, the shuffle instruction indicates that the index data is located in instance private storage, then the method 700 proceeds to block 710.

At block 720, the master logic 306 retrieves the index data from the identified location in common storage (e.g. scalar storage 310). Once the master logic 306 has retrieved the index data from the identified location in common storage (e.g. scalar storage 310), the method 700 proceeds to block 710.

At block 710, the master logic 306 causes the slave logic and the routing logic to perform the shuffle identified in the shuffle instruction in a plurality of phases. As described above, in some cases, the master logic 306 may cause the slave logic and the routing logic to perform the identified shuffle in a plurality of phases by sending information to the slave logic that identifies the shuffle. The information identifying the shuffle may comprise information identifying the shuffle pattern (e.g. either the information in the shuffle instruction identifying a location of the index data in instance private storage or the common index data retrieved in block 720); information identifying the data of the send instances to be shuffled (e.g. information from the shuffle instruction identifying a location in instance private memory where the data to be shuffled is); and information identifying where the receive instance data is to be stored (e.g. information from the shuffle instruction identifying a location in instance private memory where the data for the receive instances is to be stored). The information identifying the shuffle may be sent to the slave logic as a shuffle operation instruction. Where, as shown in FIG. 3, there is a slave logic unit for each cluster, the master logic 306 may send a shuffle operation instruction to each slave logic unit.

As described above, the shuffle operation instruction may, in some cases, comprise additional information. For example: if the master logic 306 receives information indicating which instances are not executing the instruction then this information may be included in the shuffle operation instruction; if the master logic 306 receives information (e.g. a IDX_MODE field) indicating which of a plurality of index generation modes is to be used to generate the send instance indices then this information may be included in the shuffle operation instruction; if the shuffle instruction comprises information (e.g. a GROUP_SIZE_LOG2 field) identifying each shuffle group (e.g. the information may identify the number of instances per shuffle group) this information may be included in the shuffle operation instruction; if the shuffle instruction comprises information (e.g. a PHASE_MASK field) identifying which of the possible phases are not to be executed for the shuffle this information may be included in the shuffle operation instruction; if the shuffle instruction comprises information (e.g. an ELEM_MASK field) indicating the number of bits used for each data element, this information may be included in the shuffle operation instruction; and/or if the shuffle instruction comprises information (e.g. a DWEN field) indicating which instances are not to receive data in the shuffle then this information or all or a portion of this information may be included in the shuffle operation instruction. Once the master logic 306 has caused the slave logic and the routing logic to perform the shuffle identified in the shuffle instruction in a plurality of phases, the method 700 proceeds to block 722.

As described above, in some cases, data hazards may be tracked using fence counters. Specifically, each primary instruction (an instruction in which one or more other instructions is dependent on) may be allocated a fence counter and when the primary instruction is executed the fence counter is updated (e.g. incremented) to indicate that any secondary instruction dependent on that instruction must wait. When the primary instruction has been executed, the associated fence counter is updated (e.g. decremented) to indicate that the primary instruction has been executed thus there is no data hazard. In such cases, the slave logic may notify the master logic 306 when the shuffle has been completed (e.g. when each of the plurality of phases has been executed). Such a notification may be referred to herein as a done notification (which may be identified in FIG. 7 by the shortform "Not."). Where there is a slave logic unit for each cluster, each slave logic unit may send a separate done notification to the master logic 306. At block 722, the master logic 306 receives a done notification. Where there are multiple slave logic units the method 700 may proceed to block 724 where the master logic 306 determines whether it has received a done notification from each slave logic unit. If the master logic 306 has not received a done notification from each slave logic unit, then the method proceeds back to block 722. If, however, the master logic 306 has received a done notification from each slave logic unit, then the method 700 proceeds to block 726.

Block 726 is executed if the shuffle accelerator 300 supports shuffle bursts and the shuffle instruction comprises information (e.g. a BST_LEN field) indicating whether the instruction relates to a shuffle burst and if so, how many shuffles are in the burst (i.e., how many times a shuffle with the same shuffle pattern is to be performed). Specifically, at block 726, the master logic 306 may determine whether the current shuffle relates to a shuffle burst, and if so, whether this is the last shuffle in the burst. If the master logic 306 determines that the shuffle instruction relates to a shuffle burst and there is at least one more shuffle in the burst, the method 700 proceeds to block 728. If the master logic 306 determines that the shuffle does not relate to a shuffle burst or that all of the shuffles in the burst have been initiated then the method 700 proceeds to block 730.

At block 728, the master logic 306 gets ready for the next shuffle in the burst by updating the information identifying the location in instance private memory where the shuffle data for a send instance is stored (which may be referred to as the source location) and the information identifying the location in instance private memory where the shuffle data received by a receive instance is stored (which may be referred to as the destination location). For example, if the previous shuffle operation in the burst read data from register 0 and wrote data to register 54 then the next shuffle operation in the burst will read data from register 1 and write data to register 55. Once the source and destination location information has been updated, the method 700 proceeds to block 710 where shuffle operation instruction(s) are sent to the slave logic with the updated source and destination location information. The remainder of the information in the shuffle operation instruction(s) (e.g. the phase mask, the index data, element mask) may remain the same.

At block 730, the master logic 306 updates the fence counter associated with the shuffle instruction to indicate that the instruction has been completed thus it is safe to any execute secondary instructions that are dependent on this shuffle instruction.

It will be evident, based on the description above, that the method 700 shown in FIG. 7 is only an example method which may be implemented by the master logic 306 and that other example methods may have a different combination of the blocks of FIG. 7 and/or additional blocks.

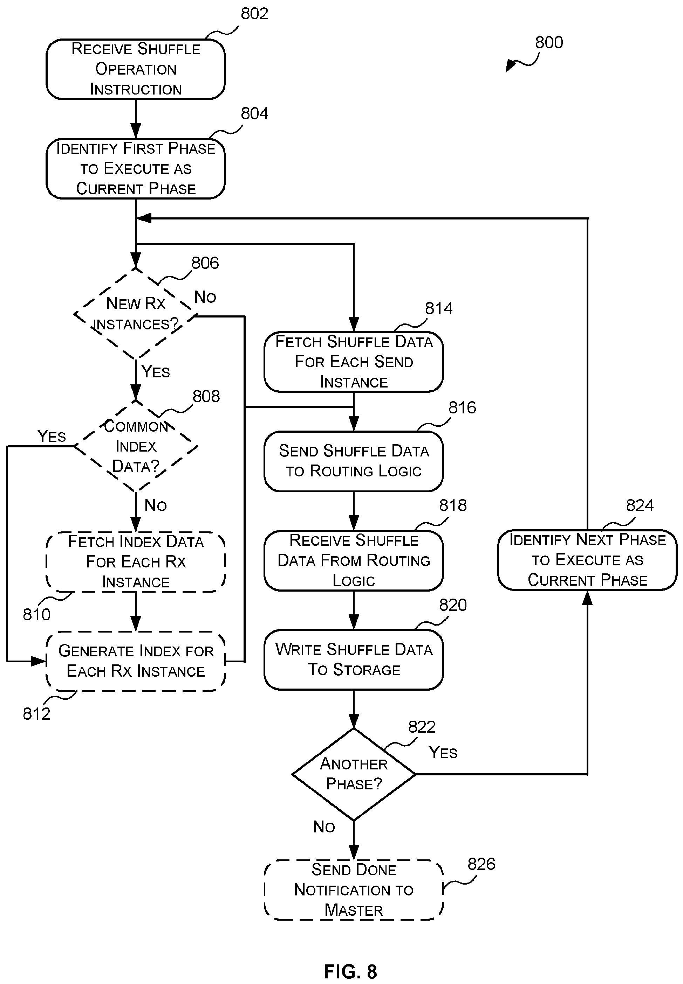

Reference is now made to FIG. 8 which illustrates an example method 800 which may be implemented by a slave logic unit $304_0$, $304_1$, $304_2$, $304_3$ of FIG. 3. The method 800 begins at block 802 where the slave logic unit $304_0$, $304_1$, $304_2$, $304_3$ receives a shuffle operation instruction from the master logic 306. As described above, the shuffle operation instruction comprises information identifying a shuffle. The information identifying the shuffle may comprise information identifying the shuffle pattern (e.g. either information identifying a location of the index data in instance private storage or common index data); information identifying the data of the send instances to be shuffled (e.g. information identifying a location in instance private memory where the data to be shuffled is); and information identifying where the receive instance data is to be stored (e.g. information identifying a location in instance private memory where the data for the receive instances is to be stored).

As described above, the shuffle operation instruction may, in some cases, comprise additional information. For example a shuffle operation instruction may comprise one or more of the following: information indicating an index generation mode of a plurality of index generation modes to be used to generate the send instance indices; information indicating the instances that are not executing the shuffle; information (e.g. a GROUP_SIZE_LOG2 field) identifying each shuffle group (e.g. the information may identify the number of instances per shuffle group); information (e.g. a PHASE_MASK field) identifying which of the possible phases are not to be executed for the shuffle; information (e.g. an ELEM_MASK field) indicating the number of bits used for each data element; information (e.g. a DWEN field) indicating which instances are not to receive data in the shuffle; and/or information indicating whether the shuffle operation is part of a shuffle burst and if so, is the first shuffle in the burst.

Once the shuffle operation instruction has been received at the slave logic unit $304_0$, $304_1$, $304_2$, $304_3$ the method 800 proceeds to block 804.

At block 804, the slave logic unit $304_0$, $304_1$, $304_2$, $304_3$ determines the first phase to execute and identifies this phase as the current phase. As described above, in some cases, there may be a predetermined list of possible phases (e.g. the phases shown in Table 2) which allow any instance in a slot to receive data from any instance in a slot. In some cases, the slave logic unit $304_0$, $304_1$, $304_2$, $304_3$ may be configured to execute each phase regardless of whether each phase is required to implement the identified shuffle. In such cases, the slave logic unit $304_0$, $304_1$, $304_2$, $304_3$ may be configured to determine that the first phase in the list (e.g. phase 0 in Table 2) is the first phase to execute and then identity the first phase as the current phase.

In other cases, the shuffle operation instruction may comprise information which identifies phases which do not need to be executed. For example, as described above, in some cases the instances in a slot may be sub-divided into equal-sized shuffle groups wherein data can only be shuffled between instances in the same shuffle group. Depending on the number of instances in each shuffle group one or more of the possible phases may be skipped. Specifically, each shuffle group size may be associated with a maximal set of phases which may comprise all or only a subset of the possible phases. In some cases, the shuffle instruction may comprise information identifying the number of instances per shuffle group and the slave logic unit $304_0$, $304_1$, $304_2$, $304_3$ may identify a maximal set of phases for the shuffle based on the number of instances per shuffle group. In such cases, the slave logic unit $304_0$, $304_1$, $304_2$, $304_3$ may determine that the first phase to execute is the first phase in the maximal set of phases.

In some cases, the shuffle operation instruction may comprise information explicitly identifying which phases are to be executed. For example, the shuffle operation instruction may comprise a phase mask which has a bit for each possible phase that indicates whether that phase is to be executed. Where the shuffle operation instruction comprises a phase mask (or the like), the slave logic unit $304_0$, $304_1$, $304_2$, $304_3$ may determine that the first phase to execute is the first phase in the phase mask that is identified as a phase to execute. If, however, the shuffle operation instruction comprises both a phase mask and information identifying the number of instances per shuffle group, the slave logic unit $304_0$, $304_1$, $304_2$, $304_3$ may be configured to determine that the first phase to execute is the first phase that is identified as a phase to execute that is in the maximal set of phases for the shuffle group size. In other words, in some cases, the bits of the phase mask corresponding to phases that are not in the maximal set of phases may be ignored.

Once the first phase to be executed has been determined and identified as the current phase, the method 800 proceeds to block 806 and block 814. Blocks 806 to 812 may only be executed if the slave logic unit $304_0$, $304_1$, $304_2$, $304_3$ is configured to generate the index of the send instance for each receive instance.

At block 806, the slave logic unit $304_0$, $304_1$, $304_2$, $304_3$ determines whether the current phase is the first phase, (i) for the shuffle operation instruction (if this shuffle is not part of a shuffle burst or shuffle bursts are not supported), or, (ii) for the shuffle burst that this shuffle operation instruction belongs to (if shuffle bursts are supported), which has this set of potential receive instances (i.e., the set of potential receive instances for the current phase). As described above, each phase has a set of potential receive instances and a set of potential send instances. Where the slave logic $304_0$, $304_1$, $304_2$, $304_3$ generates the index for the send instance of each receive instance, the slave logic $304_0$, $304_1$, $304_2$, $304_3$ only has to generate the index for each receive instance once per shuffle operation instruction (if shuffle burst is not supported) or once per shuffle burst (if shuffle bursts are supported). Since the same subset of instances can be the potential receive instances in multiple phases the indices of those send instances only need to be generated for the first of those phases. Accordingly, if it is determined that the potential receive instances of the current phase were not the potential receive instances in a phase executed for the current shuffle operation instruction or current shuffle burst (meaning that the indices for this set of receive instances have not been generated) then the method 800 proceeds to block 808. If it is determined that the slave logic $304_0$, $304_1$, $304_2$, $304_3$ has executed, as part of the current shuffle operation instruction or shuffle burst, a phase with this set of potential receive instances (meaning that the indices for all the receive instances in the set of potential receive instances for the current phase have already been generated, and thus do not need to be generated) then the method 800 proceeds directly to block 816.

At block 808, when the shuffle operation instruction comprises information identifying index data that is used to generate the indices, the slave logic unit $304_0$, $304_1$, $304_2$, $304_3$ determines whether the information identifying the index data comprises index data (indicating the index data is common to all indices) or information identifying a location in instance private storage (indicating that there is index data per instance). If it is determined that the information identifying the index data comprises information identifying a location in instance private storage then the method 800 proceeds to block 810. If, however, it is determined that the information identifying the index data comprises index data then the method 800 proceeds directly to block 812.

At block 810, the slave logic unit $304_0$, $304_1$, $304_2$, $304_3$, fetches the index data for one or more potential receive instances in the current phase (that is in the associated cluster) from the identified location in instance private storage. For example, if the identified location in storage is register 50 for example, then the slave logic unit $304_0$, $304_1$, $304_2$, $304_3$ reads register 50 of instance private storage for each receive instance in the phase (that is in the associated cluster). In some cases, the slave logic unit $304_0$, $304_1$, $304_2$, $304_3$ may be configured to fetch the index data for each potential receive instance in the current phase (that is in the associated cluster). For example, if the current phase is phase 0 in Table 2 then instances 0-31 are the potential receive instances, but only instances 0-7 are in cluster 0, thus the slave logic unit $304_0$ for cluster 0 may be configured to fetch the index data for each of instances 0-7.

In other cases, where the shuffle operation instruction comprises information indicating which instances are executing the shuffle, the slave logic unit $304_0$, $304_1$, $304_2$, $304_3$ may be configured to only fetch index data (and calculate an index for (see block 812)) for those potential receive instances in the current phase (that are in the associated cluster) that are identified as executing the shuffle; and/or where the shuffle operation instruction comprises information indicating which instances are not to write data, the slave logic unit $304_0$, $304_1$, $304_2$, $304_3$ may be configured to only fetch index data (and calculate an index (see block 812)) for those potential receive instances that are identified as writing data. Once the index data for the one or more potential receive instances the current phase (that are in the associated cluster) has been fetched from instance private storage, the method 800 proceeds to block 812.

At block 812, the slave logic unit $304_0$, $304_1$, $304_2$, $304_3$ generates the index of the send instance for one or more of the potential receive instances in the current phase (that are in the associated cluster) from the index data for the receive instance (either the common index data or the instance-specific index data) according to an index generation mode. In some cases, the slave logic unit $304_0$, $304_1$, $304_2$, $304_3$ may compute an index for each potential receive instance in the phase that is in the associated cluster. For example, if the current phase is phase 0 in Table 2 then instances 0-31 are the potential receive instances, but only instances 0-7 are in cluster 0, thus the slave logic unit $304_0$ for cluster 0 may be configured to compute a send instance index for each of instances 0-7. In other cases, the slave logic unit $304_0$, $304_1$, $304_2$, $304_3$ may only compute an index for a subset of the potential receive instance in the current phase that are in the associated cluster. For example, the slave logic unit $304_0$, $304_1$, $304_2$, $304_3$ may use the executing information and/or the data write enable information to determine which instances an index should be generated for.

As described above, in some cases the index generation mode may be fixed (e.g. it may be one of absolute index generation mode, relative index generation, or XOR index generation mode described above). In other cases, the index generation mode may be one of a plurality of supported index generation modes. In such cases, the shuffle operation instruction may comprise information (e.g. a IDX_MODE field) that indicates which of the plurality of supported index generation modes is to be used and the slave logic unit $304_0$, $304_1$, $304_2$, $304_3$ determines from that information which of the supported index generation modes is to be used to generate the indices. Once the slave logic unit $304_0$, $304_1$, $304_2$, $304_3$ has generated an index for one or more of the potential receive instances in the phase (that are in the associated cluster) the method 800 proceeds to block 816.

At block 814, which may be executed in parallel with blocks 806 to 812, the slave logic unit $304_0$, $304_1$, $304_2$, $304_3$ fetches the shuffle data for one or more potential send instances in the current phase (that are the associated cluster) at the identified location in instance private storage. For example, if the shuffle operation instruction indicates that the shuffle data is located at register 20 of instance private storage then the slave logic unit $304_0$, $304_1$, $304_2$, $304_3$ reads register 20 of the instance private storage for one or more potential send instances for the current phase. In some cases, the slave logic unit $304_0$, $304_1$, $304_2$, $304_3$ may be configured to fetch shuffle data for each potential send instance in the phase that is in the associated cluster. In other cases, where the shuffle operation instruction comprises information indicating which instances are executing the shuffle, the slave logic unit $304_0$, $304_1$, $304_2$, $304_3$ may be configured to only fetch shuffle data for those potential send instances that are in the current phase (and in the associated cluster) that are identified as executing the shuffle.

Where the slave logic unit $304_0$, $304_1$, $304_2$, $304_3$ is configured to execute the phases in an order in which any phases that have the same set of potential send instances are executed consecutively, the slave logic unit $304_0$, $304_1$, $304_2$, $304_3$ may only be configured to fetch shuffle data for the first phase for a shuffle instruction that has a set of potential send instances. For example, if phase 0-3 are executed for a shuffle instruction, the slave logic unit $304_0$, $304_1$, $304_2$, $304_3$ may be configured to only fetch the shuffle data for the potential send instances for phase 0, then buffer the read shuffle data, and use the buffered shuffle data again in phases 1, 2 and 3. Once the shuffle data has been fetched for one or more of the potential send instances, the method 800 proceeds to block 816.

At block 816, once the slave logic unit $304_0$, $304_1$, $304_2$, $304_3$ has fetched the shuffle data for one or more potential send instances in the current phase (and optionally generated the index for one or more potential receive instances in the current phase), the slave logic unit $304_0$, $304_1$, $304_2$, $304_3$ sends the shuffle data for those send instances to the routing logic 302 on a data input port associated with the corresponding send instance. In some cases, as shown in FIG. 4, the slave logic unit $304_0$, $304_1$, $304_2$, $304_3$ may be able to notify the routing logic 302 that there is valid data on a particular data input port by sending a valid signal for that data input port. In some cases, where the shuffle operation instruction comprises information indicating which instances are executing the shuffle, the slave logic unit $304_0$, $304_1$, $304_2$, $304_3$ may be configured to only send shuffle data (and optionally send a valid signal) for those potential send instances in the current phase (and in the associated cluster) that are identified as executing the shuffle.

Where the slave logic unit $304_0$, $304_1$, $304_2$, $304_3$ has generated (either as part of the current phase or a previous phase) the send instance index for one or more potential receive instances in the phase, the slave logic unit $304_0$, $304_1$, $304_2$, $304_3$ may send all or a portion of the generated index (and optionally a valid signal) for each of the one or more potential receive instances to the routing logic 302. The index acts as the control or select signal for the data output port associated with that receive instance. Specifically, the index (or a portion thereof) for a receive instance indicates to the routing logic 302 which data input port should be connected to the data output port associated with that receive instance. In some cases, as shown in FIG. 4, the slave logic unit $304_0$, $304_1$, $304_2$, $304_3$ may be able to notify the routing logic 302 that a particular index is valid by sending a valid index signal for that index.

In some cases, the slave logic unit $304_0$, $304_1$, $304_2$, $304_3$ may be configured to only send a portion of a generated index to the routing logic 302. This reduces the number of index bits sent to the routing logic 302. Specifically, since the number of potential send instances in a phase is less than the total number of instances, not all of the bits of the index will be required for selecting one of the potential send instances. For example, where there are 128 instances in a slot and 32 potential send instances per phase then 7 bit indices would be required to uniquely identify each instance in the slot, but only 5 bits would be required to uniquely identify a potential send instance in a phase. Where the set of possible phases includes the phases shown in Table 2 then the indices may be divided into two parts - specifically the first 2 bits identify the subset of potential send instances (and thus identifies the phases in which the subset resides) and the final 5 bits identifies the location of the instance within the subset. In such cases, the final 5 bits of the generated indices may be sent to the routing logic 302 as the select signals, and only if the first 2 bits indicate that the instance is a send instance in the current phase.

In some cases, where the shuffle operation instruction comprises information indicating which instances are executing the shuffle, the slave logic unit $304_0$, $304_1$, $304_2$, $304_3$ may be configured to only send an index (and optionally send an index valid signal) for those potential receive instances in the current phase (that are in the associated cluster) that are identified as executing the shuffle. In some cases, where the shuffle operation instruction comprises information that indicates that specific receive instances are not to receive data, the slave logic unit $304_0$, $304_1$, $304_2$, $304_3$ may not send an index to the routing logic 302 for any potential receive instance in the current phase (that is in the associated cluster) that is identified as not receiving data. Where the shuffle operation instruction comprises both information that identifies the executing instances and information that identifies instances that are not to receive data, the slave logic unit $304_0$, $304_1$, $304_2$, $304_3$ may not send an index to the routing logic 302 for any potential receive instance in the current phase (that is in the associated cluster) that is either not executing the shuffle or is not to receive data in a phase. If the routing logic 302 does not receive an index for a potential receive instance it may disable the hardware related to that potential receive instance (e.g. the hardware related to the data output port corresponding to that potential receive instance).

Where the slave logic units $304_0$, $304_1$, $304_2$, $304_3$ are not configured to send (all or a portion) of indices to the routing logic 302 for the potential receive instances in the current phase, the routing logic 302 may receive information from the slave logic units $304_0$, $304_1$, $304_2$, $304_3$ or the master logic 306 that allows the routing logic 302 to identify the indices, or the relevant portions thereof so as to be able to direct the desired shuffle data received on the data input ports to the desired data output port. For example, the slave logic units $304_0$, $304_1$, $304_2$, $304_3$ may be configured to send the index data for the potential receive instances in the current phase to the routing logic 302 which allows the routing logic 302 to generate the indices (or the relevant portion thereof), or where the shuffle is a broadcast from a single instance to all other instances, the master logic 306 may be configured to provide a single index (or relevant portion thereof) to the routing logic 302.

Once the shuffle data and optionally the indices for the current phase have been sent to the routing logic 302, the method 800 proceeds to block 818.

At block 818, the slave logic unit $304_0$, $304_1$, $304_2$, $304_3$ receives, for each potential receive instance in the current phase (that is in the associated cluster) that receives data from a potential send instance in the current phase (e.g. for each potential receive instance in the current phase (that is in the associated cluster) which the routing logic 302 received an index), shuffle data on the corresponding data output port. Once the slave logic unit $304_0$, $304_1$, $304_2$, $304_3$ has received the shuffle data for the receive instances in the current phase (that are in the associated cluster) the method 800 proceeds to block 820.

At block 820, for each receive instance that the slave logic unit $304_0$, $304_1$, $304_2$, $304_3$ receives shuffle data from the routing logic 302 for (e.g. the potential receive instances in the current phase that are executing and were not disabled by the data write enable mask), the slave logic unit $304_0$, $304_1$, $304_2$, $304_3$ writes the shuffle data for the receive instance to the identified location in instance private storage. Specifically, as described above, the shuffle operation instruction comprises information identifying a location in instance private storage in which received shuffle data is to be stored. Once the shuffle data received from the routing logic 302 is written to instance private storage, the method 800 proceeds to block 822.

At block 822, the slave logic unit $304_0$, $304_1$, $304_2$, $304_3$ determines whether there are any more phases to be executed. The slave logic unit $304_0$, $304_1$, $304_2$, $304_3$ may determine whether there is at least one more phase to execute in a similar manner to that described above with respect to identifying the first phase in block 804. For example, the slave logic unit $304_0$, $304_1$, $304_2$, $304_3$ may determine that there is at least one more phase to execute: if there is another possible phase in the set of possible phases that has not yet been executed; if there is another phase in the maximal set of phases that has not yet been executed; if there is another phase identified in the phase mask as to be executed that has not yet been executed; or if there is another phase identified in the phase mask that is in the maximal set of phases for the shuffle that has not yet been executed. If the slave logic unit $304_0$, $304_1$, $304_2$, $304_3$ determines that there is at least one more phase to be executed then the method 800 proceeds to block 824. If, however, the slave logic unit $304_0$, $304_1$, $304_2$, $304_3$ determines that there are no more phases to be executed then the method 800 proceeds to block 826.

At block 824, the slave logic unit $304_0$, $304_1$, $304_2$, $304_3$ determines the next phase to be executed and identifies the determined phase as the current phase. The slave logic unit $304_0$, $304_1$, $304_2$, $304_3$ may determine the next phase to execute in a similar manner to that described above with respect to identifying the first phase in block 804. For example, the slave logic unit $304_0$, $304_1$, $304_2$, $304_3$ may determine that the next phase to execute is: the next phase in the list of possible phases; the next phase in the maximal set of phases; the next phase identified as a phase to be executed; or the next phase identified as a phase to be executed that is in the maximal set of phases. Once the slave logic unit $304_0$, $304_1$, $304_2$, $304_3$ has determined the next phase to execute then the method 800 proceeds to blocks 806 and 814.

At block 826, the slave logic unit $304_0$, $304_1$, $304_2$, $304_3$ notifies (e.g. sends a done notification to) the master logic 306 that its part of the identified shuffle is complete (i.e., that all phases to implement its part of the identified shuffle have been executed). The method 800 then ends.

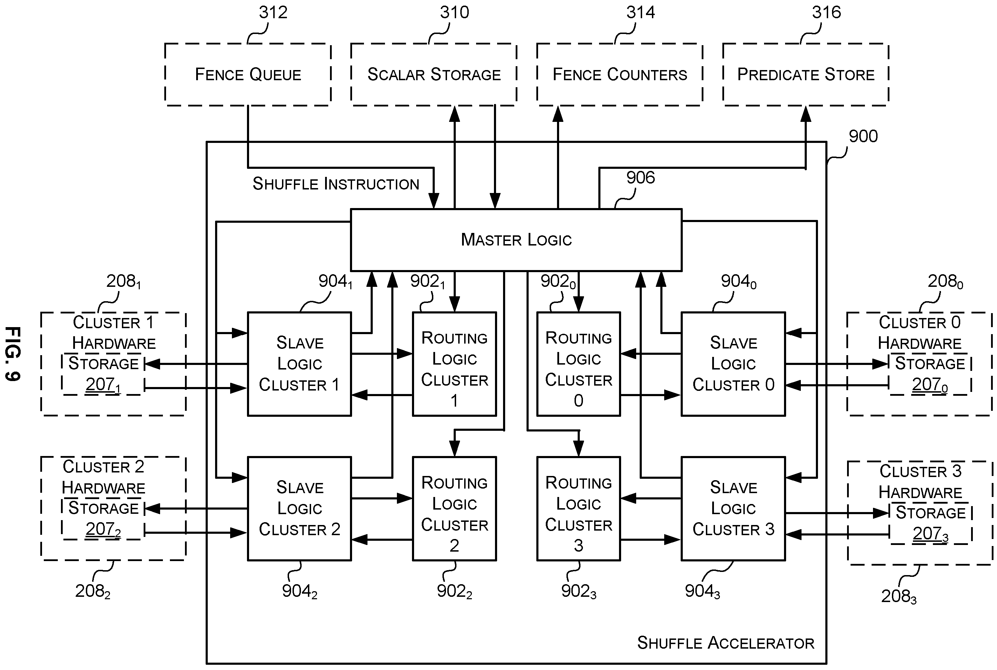

Reference is now made to FIG. 9 which illustrates a second example shuffle accelerator 900. The shuffle accelerator 900 of FIG. 9, like the shuffle accelerator 300 of FIG. 3, comprises routing logic $902_0$, $902_1$, $902_2$, $902_3$, slave logic $904_0$, $904_1$, $904_2$, $904_3$, and master logic 906 which generally operate in a similar manner as the routing logic 302, slave logic $304_0$, $304_1$, $304_2$, $304_3$, and master logic 306 of FIG. 3, respectively. However, instead of there being a single routing logic unit to which all of the slave logic units are connected, there is a separate routing logic unit $902_0$, $902_1$, $902_2$, $902_3$ for each cluster (which are collectively referred to as the routing logic) and each slave logic unit $904_0$, $904_1$, $904_2$, $904_3$ is only connected to its respective routing logic unit $902_0$, $902_1$, $902_2$, $902_3$. This means that data can only be shuffled between instances within a cluster and shuffle groups can only comprise instances within the same cluster. The shuffle accelerator 900 of FIG. 9 does not allow any instance in a slot to exchange data with any data in a slot, but reduces the number of wires that have to cross the shader core layout. In this example, each routing logic unit $902_0$, $902_1$, $902_2$, $902_3$ may be implemented as a separate crossbar. Each crossbar may have less data input ports and data output ports than there are instances in a cluster so that shuffles are still implemented in phases.

Example operations, which may be performed in a shader, in which a shuffle, and thus the shuffle accelerators described herein, may be used include, but are not limited to: (1) a broadcast operation where the data generated by an instance in a group is shared with all other instances in group; (2) a generic shuffle operation where any instance in a group can read from any other instance in a group; (3) a rotation operation wherein instances read from another instance in a group identified by their own index plus a uniform delta, modulo the group size; (4) a reduce operation in which the values of all instances in a group are reduced to a single value using an arithmetic, bitwise or logical/predicate operation; (5) an exclusive scan operation in which the values for all instances in a group with a lower index are combined by an arithmetic, bitwise or logical/predicate operation; and (6) and inclusive scan operation in which the values for all instance within a group with an index less than or equal to an index are combined by an arithmetic, bitwise or logical/predicate operation.

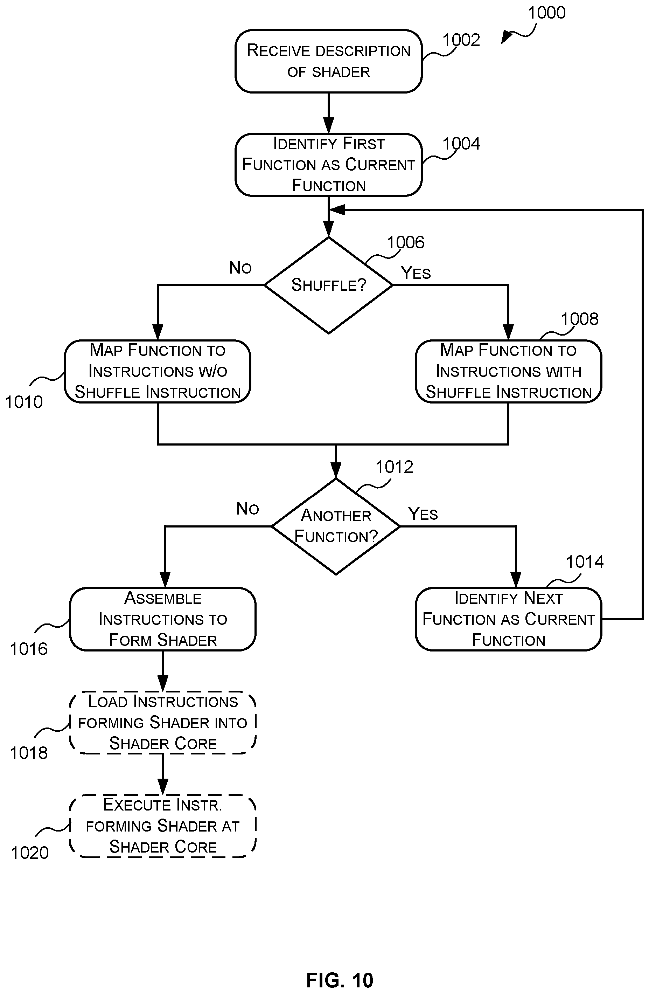

Reference is now made to FIG. 10 which illustrates an example method 1000 for generating a set of computer executable instructions that form a shader that is to be executed by a shader core of a graphics processing unit, wherein the shader core comprises a shuffle accelerator, such as the shuffle accelerators 300, 900 described herein, for performing a shuffle of data between instances executing the shader. The method 1000 may be executed by a computing-based device that comprises one or more processors. The computing-based device may comprise the shader core that is to execute the shader or the computing-based device may be separate from the shader core that is to execute the shader.

The method 1000 begins at block 1002 where a description of the shader is received. The description of the shader may comprise information identifying a plurality of predetermined functions that are to be executed as part of the shader. For example, the description of the shader may comprise information identifying a plurality of built-in functions (e.g. functions such as, but not limited to, subgroupADD(floatvalue) in a source language (e.g. OpenGL Shading Language (GLSL)) or information identifying a plurality of built-in functions (e.g. functions such as, but not limited to, OpGroupFAddd) in an intermediate language (e.g. Standard Portable Intermediate Representation (SPIR-V)). Once the description of the shader is received, the method 1000 proceeds to block 1004.

At block 1004, the first function in the description of the shader is identified as the current function. The method 1000 then proceeds to block 1006.

At block 1006, it is determined whether the identified function includes at least one shuffle of data between instances executing the shader at the same time (e.g. instances in a slot). If it is determined that the current function includes at least one shuffle of data between the plurality of instances then the method 1000 proceeds to block 1008. If, however, it is determined that the current function does not include a shuffle of data between the plurality of instances then the method 1000 proceeds to block 1010.

At block 1008, the current function is mapped to a set of computer executable instructions (e.g. machine code instructions) that, when executed by a shader core, implement the function. The set of computer executable instructions comprises a shuffle instruction for each of the at least one shuffle in the current function. Each shuffle instruction, when executed at a shader core comprising a shuffle accelerator, such as the shuffle accelerators 300, 900 described above, cause the shuffle accelerator to execute a corresponding shuffle in a plurality of phases, wherein in each phase a subset of the instances of the plurality of instances receive data from a subset of the instances of the plurality of instances.

Each shuffle instruction may take the form of any of the shuffle instructions described above. For example, the shuffle instruction may comprise information identifying the shuffle to be performed. As described above, to identify the shuffle, the shuffle instruction may comprise: information identifying the shuffle pattern (e.g. the shuffle instruction may comprise information (e.g. a SRC_IDX field) that identifies the data (e.g. index data) from which the index of the send instance of each receive instance can be determined); information identifying the data of the send instances that is to be shuffled (e.g. the shuffle instruction may comprise information (e.g. a SRC_DATA_BASE field) that identifies the location in instance private storage where the shuffle data is stored); and information identifying where the received data for each receive instance is to be stored (e.g. the shuffle instruction may comprise information (e.g. a DST_BASE field) that identifies a location in instance private storage in which the received data for a receive instance is to be stored).

As described above, in some cases, the shuffle instruction may comprise one or more pieces of additional information. For example, the shuffle instruction may, in some cases, also comprise: information (e.g. a SRC_IDENT field) identifying an identity value; information (e.g. a IDX_MODE field) indicating which of a plurality of index generation modes is to be used to generate the send instance indices; information (e.g. a BST_LEN) identifying whether the instruction relates to a shuffle burst and, if so, the number of shuffles in the burst; information (e.g. a GROUP_SIZE_LOG2 field) identifying each shuffle group (e.g. the information may identify the number of instances per shuffle group); information (e.g. a PHASE_MASK field) identifying which of the possible phases are not to be executed for the shuffle; information (e.g. an ELEM_MASK field) indicating the number of bits used for each shuffle data element; information (e.g. a DWEN field) indicating which instances are not to receive data in the shuffle; and/or information (e.g. a PWEN field) indicating that the predicate information is to be updated to reflect the instances that do not receive data in the shuffle.

Once the current function is mapped to a set of computer executable instructions that case the shader core to implement the current function, the method 1000 proceeds to block 1012.

At block 1010, the current function is mapped to a set of computer executable instructions (e.g. machine code instructions) that implement the current function, wherein the set of computer executable instructions does not comprise a shuffle instruction. Once the current function has been mapped to a set of computer executable instructions that implement the current function, the method 1000 proceeds to block 1012.

At block 1012, it is determined whether there is at least one function in the description of the shader that has not been mapped to a set of computer executable instructions. If it is determined that there is at least one function in the description of the shader that has not been mapped to a set of computer executable instructions then the method 1000 proceeds to block 1014 where the next function in the description of the shader that has not been mapped to a set of computer executable instructions is identified as the current function, and the method 1000 proceeds back to block 1006. If, however, it is determined that all functions in the description of the shader have been mapped to a set of computer executable instructions, the method 1000 may proceed to block 1016.

At block 1016, the sets of computer executable instructions mapped to the functions in blocks 1008 and 1010 are assembled to form a shader. The method 1000 may then end or the method 1000 may proceed to block 1018 or block 1020.

At block 1018, the computer executable instructions forming the shader are loaded into memory of, or accessible by, a shader core comprising a shuffler accelerator. The method 1000 may end or the method 1000 may proceed to block 1020.

At block 1020, the shader is executed at a shader core comprising a shuffle accelerator wherein executing a shuffle instruction in the shader causes the shuffle accelerator to execute the shader in a plurality of phases.

It will be evident to a person of skill in the art that the method 1000 is an example only and that various modifications may be made to the method. For example, while in the method 1000 of FIG. 10 the functions are mapped to computer executable instructions one at a time, in other examples multiple functions may be mapped to computer executable instructions in parallel.

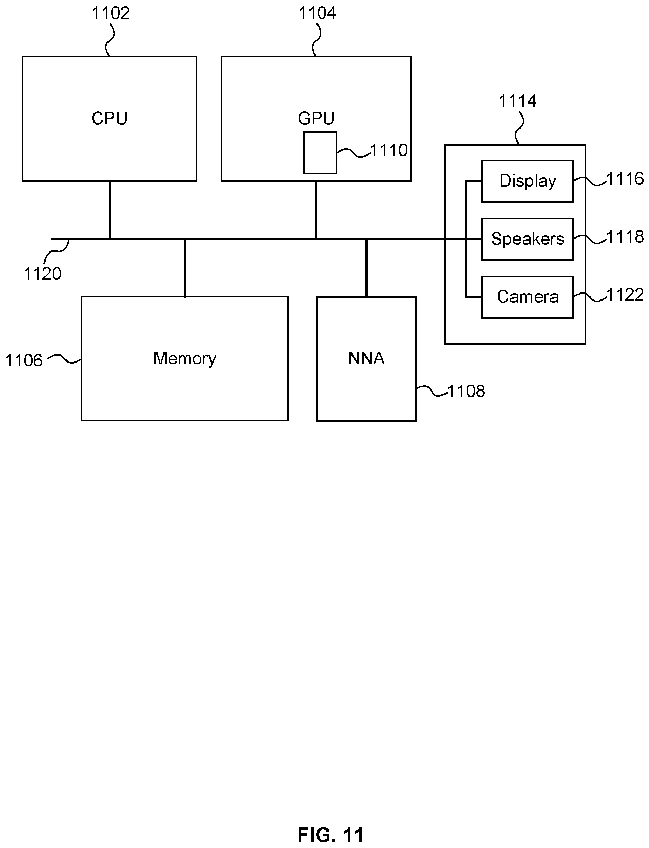

FIG. 11 shows a computer system in which the shuffle accelerators 300, 900 described herein may be implemented. The computer system comprises a CPU 1102, a GPU 1104, a memory 1106, a neural network accelerator (NNA) 1108 and other devices 1114, such as a display 1116, speakers 1118 and a camera 1122. A shuffle accelerator 1110 (corresponding to any of the shuffle accelerators 300, 900 described herein) is implemented on the GPU 1104. In other examples, one or more of the depicted components may be omitted from the system, and/or the shuffle accelerator 1110 may be implemented on the CPU 1102 or within the NNA 1108. The components of the computer system can communicate with each other via a communications bus 1120.

The graphics processing units, shader cores and shuffle accelerators of FIGS. 1-3 and 9 are shown as comprising a number of functional blocks. This is schematic only and is not intended to define a strict division between different logic elements of such entities. Each functional block may be provided in any suitable manner. It is to be understood that intermediate values described herein as being formed by a shuffle accelerator need not be physically generated by the graphics processing unit, shader core or shuffle accelerator at any point and may merely represent logical values which conveniently describe the processing performed by the graphics processing unit, shader core or shuffle accelerator between its input and output.

The shuffle accelerators and the graphics processing units described herein may be embodied in hardware on an integrated circuit. The shuffle accelerators and the graphics processing units described herein may be configured to perform any of the methods described herein. Generally, any of the functions, methods, techniques or components described above can be implemented in software, firmware, hardware (e.g., fixed logic circuitry), or any combination thereof. The terms "module," "functionality," "component", "element", "unit", "block" and "logic" may be used herein to generally represent software, firmware, hardware, or any combination thereof. In the case of a software implementation, the module, functionality, component, element, unit, block or logic represents program code that performs the specified tasks when executed on a processor. The algorithms and methods described herein could be performed by one or more processors executing code that causes the processor(s) to perform the algorithms/methods. Examples of a computer-readable storage medium include a random-access memory (RAM), read-only memory (ROM), an optical disc, flash memory, hard disk memory, and other memory devices that may use magnetic, optical, and other techniques to store instructions or other data and that can be accessed by a machine.

The terms computer program code and computer readable instructions as used herein refer to any kind of executable code for processors, including code expressed in a machine language, an interpreted language or a scripting language. Executable code includes binary code, machine code, bytecode, code defining an integrated circuit (such as a hardware description language or netlist), and code expressed in a programming language code such as C, Java or OpenCL. Executable code may be, for example, any kind of software, firmware, script, module or library which, when suitably executed, processed, interpreted, compiled, executed at a virtual machine or other software environment, cause a processor of the computer system at which the executable code is supported to perform the tasks specified by the code.

A processor, computer, or computer system may be any kind of device, machine or dedicated circuit, or collection or portion thereof, with processing capability such that it can execute instructions. A processor may be or comprise any kind of general purpose or dedicated processor, such as a CPU, GPU, NNA, System-on-chip, state machine, media processor, an application-specific integrated circuit (ASIC), a programmable logic array, a field-programmable gate array (FPGA), or the like. A computer or computer system may comprise one or more processors.

It is also intended to encompass software which defines a configuration of hardware as described herein, such as HDL (hardware description language) software, as is used for designing integrated circuits, or for configuring programmable chips, to carry out desired functions. That is, there may be provided a computer readable storage medium having encoded thereon computer readable program code in the form of an integrated circuit definition dataset that when processed (i.e. run) in an integrated circuit manufacturing system configures the system to manufacture a shuffle accelerator or a graphics processing unit configured to perform any of the methods described herein, or to manufacture a shuffle accelerator or a graphics processing unit comprising any apparatus described herein. An integrated circuit definition dataset may be, for example, an integrated circuit description.

Therefore, there may be provided a method of manufacturing, at an integrated circuit manufacturing system, a shuffle accelerator or a graphics processing units as described herein. Furthermore, there may be provided an integrated circuit definition dataset that, when processed in an integrated circuit manufacturing system, causes the method of manufacturing a shuffle accelerator or a graphics processing unit as described herein to be performed.

An integrated circuit definition dataset may be in the form of computer code, for example as a netlist, code for configuring a programmable chip, as a hardware description language defining hardware suitable for manufacture in an integrated circuit at any level, including as register transfer level (RTL) code, as high-level circuit representations such as Verilog or VHDL, and as low-level circuit representations such as OASIS (RTM) and GDSII. Higher level representations which logically define hardware suitable for manufacture in an integrated circuit (such as RTL) may be processed at a computer system configured for generating a manufacturing definition of an integrated circuit in the context of a software environment comprising definitions of circuit elements and rules for combining those elements in order to generate the manufacturing definition of an integrated circuit so defined by the representation. As is typically the case with software executing at a computer system so as to define a machine, one or more intermediate user steps (e.g. providing commands, variables etc.) may be required in order for a computer system configured for generating a manufacturing definition of an integrated circuit to execute code defining an integrated circuit so as to generate the manufacturing definition of that integrated circuit.

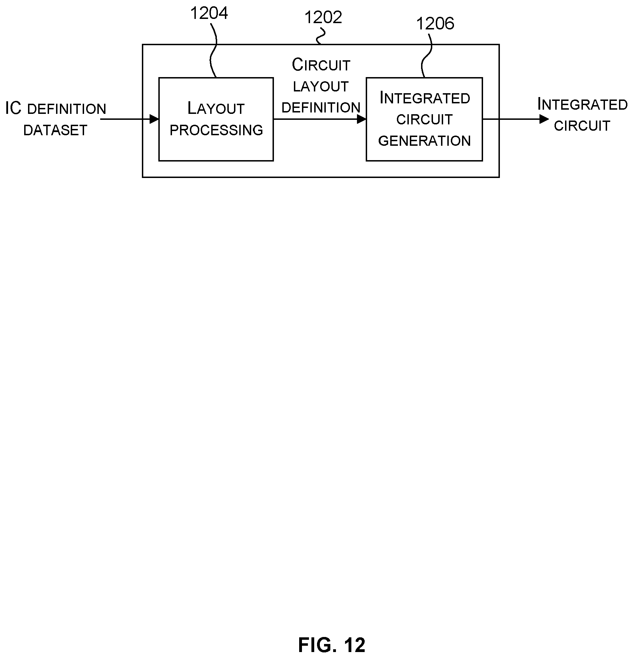

An example of processing an integrated circuit definition dataset at an integrated circuit manufacturing system so as to configure the system to manufacture a shuffle accelerator or a graphics processing unit as described herein will now be described with respect to FIG. 12.

FIG. 12 shows an example of an integrated circuit (IC) manufacturing system 1202 which is configured to manufacture a shuffle accelerator or a graphics processing unit as described in any of the examples herein. In particular, the IC manufacturing system 1202 comprises a layout processing system 1204 and an integrated circuit generation system 1206. The IC manufacturing system 1202 is configured to receive an IC definition dataset (e.g. defining a shuffle accelerator or a graphics processing unit as described in any of the examples herein), process the IC definition dataset, and generate an IC according to the IC definition dataset (e.g. which embodies a shuffle accelerator or a graphics processing unit as described in any of the examples herein). The processing of the IC definition dataset configures the IC manufacturing system 1202 to manufacture an integrated circuit embodying a shuffle accelerator or a graphics processing unit as described in any of the examples herein.

The layout processing system 1204 is configured to receive and process the IC definition dataset to determine a circuit layout. Methods of determining a circuit layout from an IC definition dataset are known in the art, and for example may involve synthesising RTL code to determine a gate level representation of a circuit to be generated, e.g. in terms of logical components (e.g. NAND, NOR, AND, OR, MUX and FLIP-FLOP components). A circuit layout can be determined from the gate level representation of the circuit by determining positional information for the logical components. This may be done automatically or with user involvement in order to optimise the circuit layout. When the layout processing system 1204 has determined the circuit layout it may output a circuit layout definition to the IC generation system 1206. A circuit layout definition may be, for example, a circuit layout description.

The IC generation system 1206 generates an IC according to the circuit layout definition, as is known in the art. For example, the IC generation system 1206 may implement a semiconductor device fabrication process to generate the IC, which may involve a multiple-step sequence of photo lithographic and chemical processing steps during which electronic circuits are gradually created on a wafer made of semiconducting material. The circuit layout definition may be in the form of a mask which can be used in a lithographic process for generating an IC according to the circuit definition. Alternatively, the circuit layout definition provided to the IC generation system 1206 may be in the form of computer-readable code which the IC generation system 1206 can use to form a suitable mask for use in generating an IC.

The different processes performed by the IC manufacturing system 1202 may be implemented all in one location, e.g. by one party. Alternatively, the IC manufacturing system 1202 may be a distributed system such that some of the processes may be performed at different locations, and may be performed by different parties. For example, some of the stages of: (i) synthesising RTL code representing the IC definition dataset to form a gate level representation of a circuit to be generated, (ii) generating a circuit layout based on the gate level representation, (iii) forming a mask in accordance with the circuit layout, and (iv) fabricating an integrated circuit using the mask, may be performed in different locations and/or by different parties.

In other examples, processing of the integrated circuit definition dataset at an integrated circuit manufacturing system may configure the system to manufacture a shuffle accelerator or a graphics processing unit without the IC definition dataset being processed so as to determine a circuit layout. For instance, an integrated circuit definition dataset may define the configuration of a reconfigurable processor, such as an FPGA, and the processing of that dataset may configure an IC manufacturing system to generate a reconfigurable processor having that defined configuration (e.g. by loading configuration data to the FPGA).

In some embodiments, an integrated circuit manufacturing definition dataset, when processed in an integrated circuit manufacturing system, may cause an integrated circuit manufacturing system to generate a device as described herein. For example, the configuration of an integrated circuit manufacturing system in the manner described above with respect to FIG. 12 by an integrated circuit manufacturing definition dataset may cause a device as described herein to be manufactured.

In some examples, an integrated circuit definition dataset could include software which runs on hardware defined at the dataset or in combination with hardware defined at the dataset. In the example shown in FIG. 12, the IC generation system may further be configured by an integrated circuit definition dataset to, on manufacturing an integrated circuit, load firmware onto that integrated circuit in accordance with program code defined at the integrated circuit definition dataset or otherwise provide program code with the integrated circuit for use with the integrated circuit.

The implementation of concepts set forth in this application in devices, apparatus, modules, and/or systems (as well as in methods implemented herein) may give rise to performance improvements when compared with known implementations. The performance improvements may include one or more of increased computational performance, reduced latency, increased throughput, and/or reduced power consumption. During manufacture of such devices, apparatus, modules, and systems (e.g. in integrated circuits) performance improvements can be traded-off against the physical implementation, thereby improving the method of manufacture. For example, a performance improvement may be traded against layout area, thereby matching the performance of a known implementation but using less silicon. This may be done, for example, by reusing functional blocks in a serialised fashion or sharing functional blocks between elements of the devices, apparatus, modules and/or systems. Conversely, concepts set forth in this application that give rise to improvements in the physical implementation of the devices, apparatus, modules, and systems (such as reduced silicon area) may be traded for improved performance. This may be done, for example, by manufacturing multiple instances of a module within a predefined area budget.

The applicant hereby discloses in isolation each individual feature described herein and any combination of two or more such features, to the extent that such features or combinations are capable of being carried out based on the present specification as a whole in the light of the common general knowledge of a person skilled in the art, irrespective of whether such features or combinations of features solve any problems disclosed herein. In view of the foregoing description it will be evident to a person skilled in the art that various modifications may be made within the scope of the invention.

## Claims

1. A shuffle accelerator (300, 900) for shuffling data between a plurality of instances executing a shader on a shader core of a graphics processing unit, the shuffle accelerator (300, 900) comprising:

   routing logic ($302, 902_0, 902_1, 902_2, 902_3$) comprising a plurality of data input ports, a plurality of data output ports, and hardware to selectively connect one or more of the plurality of data input ports to one or more of the plurality of data output ports;
   slave logic ($304_0, 304_1, 304_2, 304_3, 904_0, 904_1, 904_2, 904_3$) configured to selectively provide data from a first set of instances to one or more of the plurality of data input ports and receive data from one or more of the plurality of data output ports for a second set of instances; and
   master logic (306, 906) configured to, in response to receiving a shuffle instruction that identifies a shuffle of data between the plurality of instances, cause the routing logic ($302, 902_0, 902_1, 902_2, 902_3$) and the slave logic ($304_0, 304_1, 304_2, 304_3, 904_0, 904_1, 904_2, 904_3$) to perform the identified shuffle of data in a plurality of phases, wherein in each phase of the plurality of phases a subset of the instances of the plurality of instances receive data from a subset of the instances of the plurality of instances.

2. The shuffle accelerator (300, 900) of claim 1, wherein:

the plurality of instances is divisible into one or more equal-sized shuffle groups wherein the shuffle of data between the plurality of instances comprises a shuffle of data between instances within a same shuffle group; the shuffle instruction comprises information identifying the one or more shuffle groups; and the shuffle accelerator (300, 900) is configured to identify a maximal set of phases to perform the identified shuffle based on the identified one or more shuffle groups, and the plurality of phases comprises all or only a subset of the maximal set of phases.

3. The shuffle accelerator (300, 900) of claim 2, wherein the information identifying the one or more shuffle groups comprises information identifying a number of instances per shuffle group, and/or wherein the shuffle instruction comprises information identifying which of the maximal set of phases are to form the plurality of phases.

4. The shuffle accelerator (300, 900) of any preceding claim, wherein:

the shuffle of data between the plurality of instances comprises each of one or more receive instances of the plurality of instances receiving data from an identified send instance of the plurality of instances, each send instance being identified by an index; the shuffle instruction comprises information identifying index data; and the shuffle accelerator (300, 900) is configured to generate the index of the send instance for each of the one or more receive instances from the identified index data.

5. The shuffle accelerator (300, 900) of claim 4, wherein the identified index data comprises one of: (i) index data that is common to the one or more receive instances, and (ii) separate index data for each of the one or more receive instances.

6. The shuffle accelerator (300, 900) of claim 4 or claim 5, wherein the slave logic ($304_0$, $304_1$, $304_2$, $304_3$, $904_0$, $904_1$, $904_2$, $904_3$) is configured to generate the index of each send instance from the identified index data and provide all or a portion of the generated indices to the routing logic (302, $902_0$, $902_1$, $902_2$, $902_3$) to control operation of the routing logic (302, $902_0$, $902_1$, $902_2$, $902_3$).

7. The shuffle accelerator (300, 900) of any preceding claim, wherein:

each phase of the plurality of phases comprises a set of potential send instances and a set of potential receive instances; and the plurality of phases are executed in an order such that all the phases in the plurality of phases with a same set of potential send instances are executed consecutively.

8. The shuffle accelerator (300, 900) of any preceding claim, wherein:

each data input port of the plurality of data input ports and each data output port of the plurality of data output ports is M bits wherein M is an integer greater than 1; the shuffle instruction comprises information indicating a number of bits of the M bits to be used for each data to be shuffled; and the master logic (306, 906) is configured to, when the identified number of bits is less than M, cause the routing logic (302, $902_0$, $902_1$, $902_2$, $902_3$) and/or the slave logic ($304_0$, $304_1$, $304_2$, $304_3$, $904_0$, $904_1$, $904_2$, $904_3$) to disable hardware components thereof that are associated with unused bits.

9. The shuffle accelerator (300, 900) of any preceding claim, wherein:

the shuffle of data between the plurality of instances comprises each of one or more receive instances of the plurality of instances receiving data from an identified send instance of the plurality of instances; and the shuffle accelerator (300, 900) is configured to cause an identity value to be provided to a receive instance of the one or more receive instances if the identified send instance for that receive instance is not executing the shuffle instruction,

wherein optionally the shuffle instruction comprises information identifying the identity value.

10. The shuffle accelerator (300, 900) of any preceding claim, wherein the plurality of instances are sub-divided into a plurality of clusters and the slave logic comprises a slave logic unit ($304_0$, $304_1$, $304_2$, $304_3$, $904_0$, $904_1$, $904_2$, $904_3$) for each cluster of the plurality of clusters that is configured to shuffle data from and to the instances in the associated cluster.

11. The shuffle accelerator (300) of claim 18, wherein:

(i) the routing logic comprises a single routing logic unit (302), and each of the slave logic units ($304_0$, $304_1$, $304_2$, $304_3$) is coupled to a subset of the plurality of data input ports and a subset of the plurality of data output ports; or
(ii) the routing logic comprises a routing logic unit ($902_0$, $902_1$, $902_2$, $902_3$) for each cluster of the plurality of clusters, each routing logic unit ($902_0$, $902_1$, $902_2$, $902_3$) comprising a subset of the plurality of data input ports and a subset of the plurality of data output ports, and each slave logic unit ($304_0$, $304_1$, $304_2$, $304_3$, $904_0$, $904_1$, $904_2$, $904_3$) is only coupled to the data input ports and the data output ports of the routing logic unit ($902_0$, $902_1$, $902_2$, $902_3$) for the associated cluster.

12. A method (700, 800) of shuffling data between a plurality of instances executing a shader on a shader core of a graphics processing unit using a shuffle accelerator, the method (700, 800) comprising, at the shuffle accelerator:

receiving a shuffle instruction that identifies a shuffle of data between the plurality of instances;
dividing the identified shuffle into a plurality of phases, wherein each phase comprises a set of potential receive instances and a set of potential send instances wherein any potential receive instance in a phase can receive data from any potential send instance in the phase, the set of potential receive instances and the set of potential send instances in a phase each comprising a subset of the plurality of instances; and
for each of the plurality of phases, sending data from one or more of the potential send instances in the phase to one or more of the potential receive instances in the phase.

13. The method (700, 800) of claim 12, wherein the shuffle accelerator comprises routing logic comprising a plurality of data input ports and a plurality of data output ports and hardware to selectively connect one or more of the plurality of data input ports to one or more of the plurality of data output ports, and wherein sending data from the one or more potential send instances in a phase to one or more potential receive instance in the phase comprises:

fetching shuffle data from instance private storage of each of the one or more potential send instances in the phase;
sending the fetched shuffle data for each of the one or more potential send instances to the routing logic on a data input port associated with the send instance;
receiving shuffle data from the routing logic for each of the one or more potential receive instance in the phase on a data output port associated with the receive instance; and
writing the received shuffle data for each of the one or more potential receive instances to instance private storage for that receive instance.

14. Computer readable code configured to cause the method of claim 12 or claim 13 to be performed when the code is run.

15. A computer readable storage medium having stored thereon an integrated circuit definition dataset that, when processed in an integrated circuit manufacturing system, configures the integrated circuit manufacturing system to manufacture the shuffle accelerator of any of claims 1 to 11.

**FIG. 1**

FIG. 2

EP 4 645 074 A1

SHADER CORE — 102

CLUSTER 1 HARDWARE — $208_1$
- STORAGE $207_1$
- EXECUTION UNIT 104
- EXECUTION UNIT 104

CLUSTER 0 HARDWARE — $208_0$
- STORAGE $207_0$
- EXECUTION UNIT 104
- EXECUTION UNIT 104

CLUSTER 2 HARDWARE — $208_2$
- STORAGE $207_2$
- EXECUTION UNIT 104
- EXECUTION UNIT 104

CLUSTER 3 HARDWARE — $208_3$
- STORAGE $207_3$
- EXECUTION UNIT 104
- EXECUTION UNIT 104

FIG. 3

FIG. 4

FIG. 5

FIG. 6

**FIG. 7**

802

RECEIVE SHUFFLE
OPERATION
INSTRUCTION

800

804

IDENTIFY FIRST PHASE
TO EXECUTE AS
CURRENT PHASE

806

NEW RX
INSTANCES?

No

YES

814

FETCH SHUFFLE DATA
FOR EACH SEND
INSTANCE

808

COMMON
INDEX
DATA?

YES

816

SEND SHUFFLE DATA
TO ROUTING LOGIC

No

810

FETCH INDEX DATA
FOR EACH RX
INSTANCE

818

RECEIVE SHUFFLE
DATA FROM ROUTING
LOGIC

824

IDENTIFY NEXT PHASE
TO EXECUTE AS
CURRENT PHASE

812

GENERATE INDEX FOR
EACH RX INSTANCE

820

WRITE SHUFFLE DATA
TO STORAGE

822

ANOTHER
PHASE?

YES

No

826

SEND DONE
NOTIFICATION TO
MASTER

FIG. 8

FIG. 9

1000

RECEIVE DESCRIPTION OF SHADER — 1002

IDENTIFY FIRST FUNCTION AS CURRENT FUNCTION — 1004

SHUFFLE? — 1006

No → MAP FUNCTION TO INSTRUCTIONS W/O SHUFFLE INSTRUCTION — 1010

Yes → MAP FUNCTION TO INSTRUCTIONS WITH SHUFFLE INSTRUCTION — 1008

ANOTHER FUNCTION? — 1012

No → ASSEMBLE INSTRUCTIONS TO FORM SHADER — 1016

Yes → IDENTIFY NEXT FUNCTION AS CURRENT FUNCTION — 1014

LOAD INSTRUCTIONS FORMING SHADER INTO SHADER CORE — 1018

EXECUTE INSTR. FORMING SHADER AT SHADER CORE — 1020

**FIG. 10**

**FIG. 11**

FIG. 12

Europäisches
Patentamt
European
Patent Office
Office européen
des brevets

# EUROPEAN SEARCH REPORT

**Application Number**

EP 25 17 2710

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | US 2019/250924 A1 (LAI SHOU-JEN [TW] ET AL) 15 August 2019 (2019-08-15)<br>* figures 2,4,7,8A-8B,9 *<br>* paragraph [0006] *<br>* paragraph [0023] - paragraph [0054] *<br>----- | 1-15 | INV.<br>G06F9/30 |

**TECHNICAL FIELDS SEARCHED (IPC)**

G06F

The present search report has been drawn up for all claims

| Place of search | Date of completion of the search | Examiner |
|---|---|---|
| The Hague | 16 May 2025 | De Poy, Iker |

EPO FORM 1503 03.82 (P04C01)

## ANNEX TO THE EUROPEAN SEARCH REPORT
## ON EUROPEAN PATENT APPLICATION NO.

EP 25 17 2710

This annex lists the patent family members relating to the patent documents cited in the above-mentioned European search report.
The members are as contained in the European Patent Office EDP file on
The European Patent Office is in no way liable for these particulars which are merely given for the purpose of information.

16-05-2025

| Patent document cited in search report | Publication date | Patent family member(s) | Publication date |
|---|---|---|---|
| US 2019250924 A1 | 15-08-2019 | CN 107229463 A | 03-10-2017 |
| | | TW 201734770 A | 01-10-2017 |
| | | US 2017277567 A1 | 28-09-2017 |
| | | US 2019250924 A1 | 15-08-2019 |

EPO FORM P0459

For more details about this annex : see Official Journal of the European Patent Office, No. 12/82

**EP 4 645 074 A1**

<br>

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- GB 2406000 A